# EUROPEAN PATENT APPLICATION

(11) **EP 4 525 518 A1**
(43) Date of publication of application: **19.03.2025**
(21) Application number: 23814701.1
(22) Date of filing: 14.03.2023
(51) Int. Cl.: H04W 36/00

(54) **COMMUNICATION METHOD AND APPARATUS**

(30) Priority: 30.05.2022 CN 202210597843
(71) Applicant: Huawei Technologies Co., Ltd., Shenzhen, Guangdong 518129 (CN)
(72) Inventor: LI, Jie, Shenzhen, Guangdong 518129 (CN); PENG, Wenjie, Shenzhen, Guangdong 518129 (CN); WANG, Rui, Shenzhen, Guangdong 518129 (CN)
(74) Representative: Goddar, Heinz J.
(86) International application number: PCT/CN2023/081291
(87) International publication number: WO 2023/231503

(57) **Abstract**

This application provides a communication method and apparatus, to implement inter-cell/inter-base station handover of a remote UE in a U2N relay scenario. The method includes: A first terminal device receives first indication information sent by a first network device, where the first indication information indicates to release a first sidelink between the first terminal device and a second terminal device, the second terminal device communicates with the first network device via a wireless network, the second terminal device provides a function needed for communication between the first terminal device and the first network device, and the first cell is a cell served by the first network device. The first terminal device releases the first sidelink based on the first indication information. The first terminal device receives first configuration information sent by the first network device, where the first configuration information is used by the first terminal device to perform handover from the first cell to the second cell.

## Description

This application claims priority to Patent Application No. 202210597843.9, filed with the China National Intellectual Property Administration on May 30, 2022 and entitled "COMMUNICATION METHOD AND APPARATUS", which is incorporated herein by reference in its entirety.

### TECHNICAL FIELD

This application relates to the communication field, and more specifically, to a communication method and apparatus.

### BACKGROUND

In a wireless communication system, user equipments (user equipments, UEs) may communicate with each other via a network, or may directly communicate with each other without a network device. A direct communication interface between the UEs is referred to as a PC5 interface, and is similar to a Uu interface between the UE and the network. A link between the UEs is referred to as a sidelink. To expand network coverage and reduce power consumption of the UE, a relay (relay) UE is used between the UE and the network (network). If the remote (remote) UE is located at an edge of the network coverage or is not within the network coverage, the remote UE may communicate with the network by using a function provided by the relay UE. The remote UE communicates with the relay UE through the PC5 interface, and the relay UE communicates with the network through the Uu interface.

A user equipment-to-network (UE-to-network, U2N) relay function means that the relay UE provides a connection to the network for the remote UE, and includes a layer 3 (layer 3, L3) relay and a layer 2 (layer 2, L2) relay. For the L2 U2N relay, both a user plane adaptation layer and a control plane adaptation layer are placed above a radio link control (radio link control, RLC) layer of a Uu interface between the relay UE and a base station, and a data packet of the relay UE is relayed and forwarded below a packet data convergence protocol (packet data convergence protocol, PDCP) layer. In U2N relay enhancement, the U2N relay needs to support multi-path (multi-path). The multi-path can not only expand the coverage, but also can improve throughput and reliability.

Currently, in a U2N relay scenario in which the remote UE communicates with the network by using the function provided by the relay UE, when the remote UE needs inter-base station/inter-cell handover, that is, when the remote UE needs to be handed over from a currently connected source base station to a target base station or from a currently connected first cell to a second cell, problems such as how to release a sidelink between the remote UE and a currently connected relay UE, how to determine a target relay UE to which the remote UE is to be connected, and a specific link used by the remote UE to communicate with the second cell after the handover need to be urgently resolved.

### SUMMARY

This application provides a communication method and apparatus, to implement inter-cell/inter-base station handover of a remote UE in a U2N relay scenario.

According to a first aspect, a communication method is provided. The method may be performed by a chip or a chip system on a terminal device side. The method is applicable to a process of handing over a first terminal device from a first cell to a second cell. The method includes: The first terminal device receives first indication information sent by a first network device. The first indication information indicates to release a first sidelink between the first terminal device and a second terminal device. The second terminal device communicates with the first network device via a wireless network, and the second terminal device is configured to provide a function needed for communication between the first terminal device and the first network device. The first cell is a cell served by the first network device. The first terminal device releases the first sidelink based on the first indication information. The first terminal device receives first configuration information sent by the first network device. The first configuration information is used by the first terminal device to perform the handover from the first cell to the second cell. Optionally, the second cell may be a cell served by the first network device, or the second cell may be a cell served by a second network device.

According to the foregoing technical solution, when the first network device determines to hand over the first terminal device from the first cell to the second cell, the first network device sends the first indication information to the first terminal device. The first terminal device receives the first indication information sent by the first network device. The first terminal device releases the first sidelink between the first terminal device and the second terminal device based on the first indication information. The first terminal device receives the first configuration information sent by the first network device. The first configuration information is used by the first terminal device to perform the handover from the first cell to the second cell. The first terminal device may perform the handover from the first cell to the second cell based on the first configuration information. The first terminal device is a remote UE, and the second terminal device is a relay UE. The first cell is the cell served by the first network device, and the second cell may be the cell served by the first network device or may be the cell served by the second network device. Therefore, in this embodiment of this application, inter-cell/inter-base station handover of the remote UE in a U2N relay scenario can be implemented.

With reference to the first aspect, in some implementations of the first aspect, before the first terminal device receives the first indication information sent by the first network device, the method further includes: The first terminal device sends measurement report information to the first network device. The measurement report information is used by the first network device to determine to hand over the first terminal device from the first cell to the second cell. The measurement report information includes signal strength of a third terminal device and/or capability information of the third terminal device that are/is obtained by the first terminal device through measurement, and the capability information of the third terminal device indicates whether the third terminal device supports multi-path. When determining that the first terminal device needs to be handed over from the first cell to the second cell, the first network device may determine a target terminal device in the third terminal device based on the signal strength of the third terminal device and/or the capability information of the third terminal device that are/is obtained by the first terminal device through measurement in the measurement report information sent by the first terminal device. The target terminal device is configured to provide a function needed for communication between the first terminal device and the second cell.

With reference to the first aspect, in some implementations of the first aspect, the method further includes: The first terminal device establishes a direct link between the first terminal device and the second cell based on the first configuration information. The first terminal device may communicate with the second cell through the direct link.

With reference to the first aspect, in some implementations of the first aspect, the first configuration information further includes an identifier of a target terminal device, and the target terminal device is configured to provide a function needed for communication between the first terminal device and the second cell. The third terminal device includes the target terminal device. The method further includes: The first terminal device establishes a second sidelink between the first terminal device and the target terminal device based on the first configuration information. The first terminal device may communicate with the second cell through the second sidelink.

With reference to the first aspect, in some implementations of the first aspect, before the first terminal device sends the measurement report information to the first network device, the method further includes: The first terminal device receives the capability information of the third terminal device from the third terminal device. The first terminal device may successfully obtain the capability information of the third terminal device.

With reference to the first aspect, in some implementations of the first aspect, before the first terminal device receives the first configuration information sent by the first network device, the method further includes: The first terminal device sends a release complete message to the first network device. The release complete message indicates that the first sidelink is successfully released. When successfully releasing the first sidelink based on the first indication information, the first terminal device sends the release complete message to the first network device, to notify the first network device that the first sidelink has been successfully released. After the first network device learns that the first terminal device has released the first sidelink, the first network device may send the first configuration information to the first network device. For example, when the first network device determines to hand over the first terminal device from the first cell to the second cell, and the second cell is the cell served by the second network device, the first network device sends a handover request message to the second network device after learning that the first terminal device has successfully released the first sidelink. The handover request message does not carry sidelink configuration information of the first terminal device that cannot be understood by the second network device. In this way, fullConfig handover can be prevented from being triggered.

For inter-system handover from evolved universal mobile telecommunications system (universal mobile telecommunications system, UMTS) terrestrial radio access (evolved-UMTS terrestrial radio access, E-UTRA) to new radio (new radio, NR), fullConfig indicates whether incremental signaling of a service data adaptation protocol (service data adaptation protocol, SDAP)/packet data convergence protocol (packet data convergence protocol, PDCP) from a source system is applicable. When the terminal device receives a full configuration instruction, the terminal device releases/clears all current dedicated radio configurations except the following: a cell radio network temporary identifier (cell radio network temporary identifier, C-RNTI) of a master cell group, an access stratum security configuration associated with a master key, a signaling radio bearer (signaling radio bearer1, SRB1)/SRB2 configuration configured through radioBearerConfig or radioBearerConfig2 and a data radio bearer/multicast broadcast service radio bearer configuration, and a recorded measurement configuration.

According to a second aspect, a communication method is provided. The method may be performed by a chip or a chip system on a network device side. The method is applicable to a process of handing over a first terminal device from a first cell to a second cell. The method includes: A first network device sends first indication information to the first terminal device. The first indication information indicates to release a first sidelink between the first terminal device and a second terminal device. The second terminal device communicates with the first network device via a wireless network, and the second terminal device is configured to provide a function needed for communication between the first terminal device and the first network device. The first cell is a cell served by the first network device. The first network device sends first configuration information to the first terminal device. The first configuration information is used by the first terminal device to perform the handover from the first cell to the second cell. Optionally, the second cell may be a cell served by the first network device, or the second cell may be a cell served by a second network device.

According to the foregoing technical solution, when the first network device determines to hand over the first terminal device from the first cell to the second cell, the first network device sends the first indication information to the first terminal device. The first terminal device releases the first sidelink between the first terminal device and the second terminal device based on the first indication information. The first network device sends the first configuration information to the first terminal device. The first configuration information is used by the first terminal device to perform the handover from the first cell to the second cell. The first terminal device may perform the handover from the first cell to the second cell based on the first configuration information. The first terminal device is a remote UE, and the second terminal device is a relay UE. The first cell is the cell served by the first network device, and the second cell may be the cell served by the first network device or may be the cell served by the second network device. Therefore, in this embodiment of this application, inter-cell/inter-base station handover of the remote UE in a U2N relay scenario can be implemented.

With reference to the second aspect, in some implementations of the second aspect, before the first network device sends the first indication information to the first terminal device, the method further includes: The first network device receives measurement report information sent by the first terminal device. The measurement report information is used by the first network device to determine to hand over the first terminal device from the first cell to the second cell. The measurement report information includes signal strength of a third terminal device and/or capability information of the third terminal device that are/is obtained by the first terminal device through measurement, and the capability information of the third terminal device indicates whether the third terminal device supports multi-path. When determining that the first terminal device needs to be handed over from the first cell to the second cell, the first network device may determine a target terminal device in the third terminal device based on the signal strength of the third terminal device and/or the capability information of the third terminal device that are/is obtained by the first terminal device through measurement in the measurement report information sent by the first terminal device. The target terminal device is configured to provide a function needed for communication between the first terminal device and the second cell.

With reference to the second aspect, in some implementations of the second aspect, before the first network device sends the first configuration information to the first terminal device, the method further includes: The first network device sends a handover request message to the second network device. The handover request message indicates to hand over the first terminal device from the first cell to the second cell, and the handover request message includes related information of a third terminal device that is obtained by the first terminal device through measurement. The second cell is the cell served by the second network device. The third terminal device is a terminal device served by the second cell or the second network device. The first network device receives a handover request acknowledgement message sent by the second network device. The handover request acknowledgement message includes an identifier of a target terminal device, and the target terminal device is determined by the second network device in the third terminal device. The target terminal device is configured to provide a function needed for communication between the first terminal device and the second network device. The first configuration information includes the identifier of the target terminal device. The handover request message sent by the first network device to the second network device includes the related information of the third terminal device that is obtained by the first terminal device through measurement. The second network device may determine the target terminal device in the third terminal device based on the related information of the third terminal device. It should be understood that there are one or more third terminal devices.

With reference to the second aspect, in some implementations of the second aspect, the related information of the third device includes capability information of the third terminal device. The capability information of the third terminal device indicates whether the third terminal device supports multi-path. According to the foregoing solution, the handover request message sent by the first network device to the second network device includes the capability information of the third terminal device, so that a case in which the target terminal device determined by the second network device is not applicable can be avoided.

With reference to the second aspect, in some implementations of the second aspect, before the first network device sends the first configuration information to the first terminal device, the method further includes: The first network device sends a handover request message to the second network device. The handover request message indicates to hand over the first terminal device from the first cell to the second cell, and the handover request message includes an identifier of a target terminal device. The target terminal device is determined by the first network device in a third terminal device, and the target terminal device is configured to provide a function needed for communication between the first terminal device and the second network device. The second cell is the cell served by the second network device. The first network device receives a handover request acknowledgement message sent by the second network device. The first configuration information includes the identifier of the target terminal device. In this implementation, the first network device determines the target terminal device. The handover request message sent by the first network device to the second network device includes the identifier of the target terminal device, and notifies the second network device of a specific terminal device (relay UE) via which the second network device communicates with the first terminal device.

With reference to the second aspect, in some implementations of the second aspect, before the first network device sends the handover request message to the second network device, the method further includes: The first network device receives a release complete message sent by the first terminal device. The release complete message indicates that the first sidelink is successfully released. After learning that the first terminal device has successfully released the first sidelink, the first network device sends the handover request message to the second network device. The handover request message does not carry sidelink configuration information of the first terminal device that cannot be understood by the second network device. In this way, fullConfig handover can be prevented from being triggered.

With reference to the second aspect, in some implementations of the second aspect, before the first network device sends the first indication information to the first terminal device, the method further includes: The first network device determines that capability information of the second network device is not obtained or the capability information of the second network device does not match capability information of the first network device. The capability information of the first network device indicates whether the first network device supports the multi-path. The capability information of the second network device indicates whether the second network device supports the multi-path.

According to the foregoing solution, when the first network device determines that the capability information of the second network device is not obtained or the capability information of the second network device does not match the capability information of the first network device, the first network device sends, to the first terminal device, the first indication information indicating to release the first sidelink between the first terminal device and the second terminal device. This can prevent the first network device from sending, by sending the handover request message to the second network device, the sidelink configuration information of the first terminal device that cannot be understood by the second network device, and prevent fullConfig handover from being triggered.

According to a third aspect, a communication method is provided. The method may be performed by a chip or a chip system on a terminal device side. The method is applicable to a process of handing over a first terminal device from a first cell to a second cell. The method includes: When the first terminal device receives first configuration information sent by a first network device, the first terminal device releases a first sidelink between the first terminal device and a second terminal device. The first configuration information is used by the first terminal device to perform the handover from the first cell to the second cell. The second terminal device communicates with the first network device via a wireless network, and the second terminal device is configured to provide a function needed for communication between the first terminal device and the first network device. The first cell is a cell served by the first network device. The first terminal device performs the handover from the first cell to the second cell based on the first configuration information. Optionally, the second cell may be a cell served by the first network device, or the second cell may be a cell served by a second network device.

According to the foregoing technical solution, when the first network device determines to hand over the first terminal device from the first cell to the second cell, the first network device sends the first configuration information to the first terminal device. The first configuration information is used by the first terminal device to perform the handover from the first cell to the second cell. When the first terminal device receives the first configuration information, the first terminal device releases the first sidelink between the first terminal device and the second terminal device. The first terminal device performs the handover from the first cell to the second cell based on the first configuration information. The first terminal device is a remote UE, and the second terminal device is a relay UE. The first cell is the cell served by the first network device, and the second cell may be the cell served by the first network device or may be the cell served by the second network device. Therefore, in this embodiment of this application, inter-cell/inter-base station handover of the remote UE in a U2N relay scenario can be implemented.

With reference to the third aspect, in some implementations of the third aspect, before the first terminal device receives the first configuration information sent by the first network device, the method further includes: The first terminal device sends measurement report information to the first network device. The measurement report information is used by the first network device to determine to hand over the first terminal device from the first cell to the second cell. The measurement report information includes signal strength of a third terminal device and/or capability information of the third terminal device that are/is obtained by the first terminal device through measurement, and the capability information of the third terminal device indicates whether the third terminal device supports multi-path. When determining that the first terminal device needs to be handed over from the first cell to the second cell, the first network device may determine a target terminal device in the third terminal device based on the signal strength of the third terminal device and/or the capability information of the third terminal device that are/is obtained by the first terminal device through measurement in the measurement report information sent by the first terminal device. The target terminal device is configured to provide a function needed for communication between the first terminal device and the second cell.

With reference to the third aspect, in some implementations of the third aspect, that the first terminal device performs the handover from the first cell to the second cell based on the first configuration information includes: The first terminal device establishes a direct link between the first terminal device and the second cell based on the first configuration information. The first terminal device may communicate with the second cell through the direct link.

With reference to the third aspect, in some implementations of the third aspect, the first configuration information further includes an identifier of a target terminal device, and the target terminal device is configured to provide a function needed for communication between the first terminal device and the second cell. The third terminal device includes the target terminal device. That the first terminal device performs the handover from the first cell to the second cell based on the first configuration information includes: The first terminal device establishes a second sidelink between the first terminal device and the target terminal device based on the first configuration information. The first terminal device may communicate with the second cell through the second sidelink.

With reference to the third aspect, in some implementations of the third aspect, before the first terminal device sends the measurement report information to the first network device, the method further includes: The first terminal device receives the capability information of the third terminal device from the third terminal device. The first terminal device may successfully obtain the capability information of the third terminal device.

With reference to the third aspect, in some implementations of the third aspect, that the first terminal device releases a first sidelink between the first terminal device and a second terminal device includes: The first terminal device determines, based on an identifier of the second cell, that the second cell is the cell served by the second network device. The first terminal device releases the first sidelink between the first terminal device and the second terminal device. The first terminal device may determine, based on the identifier of the second cell, to be handed over from the first network device to the second network device, and the first terminal device releases the first sidelink to prepare for the handover.

According to a fourth aspect, a communication method is provided. The method may be performed by a chip or a chip system on a network device side. The method is applicable to a process of handing over a first terminal device from a first cell to a second cell. The method includes: A first network device determines to hand over the first terminal device from the first cell to the second cell. A second terminal device communicates with the first network device via a wireless network, and the second terminal device is configured to provide a function needed for communication between the first terminal device and the first network device. The first cell is a cell served by the first network device. The first network device sends first configuration information to the first terminal device. The first configuration information is used by the first terminal device to perform the handover from the first cell to the second cell. Optionally, the second cell may be a cell served by the first network device, or the second cell may be a cell served by a second network device.

According to the foregoing technical solution, when the first network device determines to hand over the first terminal device from the first cell to the second cell, the first network device sends the first configuration information to the first terminal device. The first configuration information is used by the first terminal device to perform the handover from the first cell to the second cell. When the first terminal device receives the first configuration information, the first terminal device releases the first sidelink between the first terminal device and the second terminal device. The first terminal device performs the handover from the first cell to the second cell based on the first configuration information. The first terminal device is a remote UE, and the second terminal device is a relay UE. The first cell is the cell served by the first network device, and the second cell may be the cell served by the first network device or may be the cell served by the second network device. Therefore, in this embodiment of this application, inter-cell/inter-base station handover of the remote UE in a U2N relay scenario can be implemented.

With reference to the fourth aspect, in some implementations of the fourth aspect, before the first network device determines to hand over the first terminal device from the first cell to the second cell, the method further includes: The first network device receives measurement report information sent by the first terminal device. The measurement report information is used by the first network device to determine to hand over the first terminal device from the first cell to the second cell. The measurement report information includes signal strength of a third terminal device and/or capability information of the third terminal device that are/is obtained by the first terminal device through measurement, and the capability information of the third terminal device indicates whether the third terminal device supports multi-path. When determining that the first terminal device needs to be handed over from the first cell to the second cell, the first network device may determine a target terminal device in the third terminal device based on the signal strength of the third terminal device and/or the capability information of the third terminal device that are/is obtained by the first terminal device through measurement in the measurement report information sent by the first terminal device. The target terminal device is configured to provide a function needed for communication between the first terminal device and the second cell.

With reference to the fourth aspect, in some implementations of the fourth aspect, before the first network device sends the first configuration information to the first terminal device, the method further includes: The first network device sends a handover request message to the second network device. The handover request message indicates to hand over the first terminal device from the first cell to the second cell, and the handover request message includes related information of the third terminal device that is obtained by the first terminal device through measurement. The second cell is the cell served by the second network device. The third terminal device is a terminal device served by the second cell or the second network device. The first network device receives a handover request acknowledgement message sent by the second network device. The handover request acknowledgement message includes an identifier of a target terminal device, and the target terminal device is determined by the second network device in the third terminal device. The target terminal device is configured to provide a function needed for communication between the first terminal device and the second network device. The first configuration information includes the identifier of the target terminal device. The handover request message sent by the first network device to the second network device includes the related information of the third terminal device that is obtained by the first terminal device through measurement. The second network device may determine the target terminal device in the third terminal device based on the related information of the third terminal device. It should be understood that there are one or more third terminal devices.

With reference to the fourth aspect, in some implementations of the fourth aspect, the related information of the third terminal device includes capability information of the third terminal device. The capability information of the third terminal device indicates whether the third terminal device supports multi-path. According to the foregoing solution, the handover request message sent by the first network device to the second network device includes the capability information of the third terminal device, so that a case in which the target terminal device determined by the second network device is not applicable can be avoided.

With reference to the fourth aspect, in some implementations of the fourth aspect, before the first network device sends the first configuration information to the first terminal device, the method further includes: The first network device sends a handover request message to the second network device. The handover request message indicates to hand over the first terminal device from the first cell to the second cell, and the handover request message includes an identifier of a target terminal device. The target terminal device is determined by the first network device in the third terminal device, and the target terminal device is configured to provide a function needed for communication between the first terminal device and the second network device. The second cell is the cell served by the second network device. The first network device receives a handover request acknowledgement message sent by the second network device. The first configuration information includes the identifier of the target terminal device. In this implementation, the first network device determines the target terminal device. The handover request message sent by the first network device to the second network device includes the identifier of the target terminal device, and notifies the second network device of a specific terminal device (relay UE) via which the second network device communicates with the first terminal device.

With reference to the fourth aspect, in some implementations of the fourth aspect, when the first network device determines that capability information of the second network device is not obtained or the capability information of the second network device does not match capability information of the first network device, the handover request message does not include sidelink configuration information of the first terminal device. The capability information of the first network device indicates whether the first network device supports the multi-path, and the capability information of the second network device indicates whether the second network device supports the multi-path.

According to the foregoing solution, when the first network device determines that the capability information of the second network device is not obtained or the capability information of the second network device does not match the capability information of the first network device, the handover request message sent by the first network device to the second network device does not include the sidelink configuration information of the first terminal device. This can prevent the handover request message from carrying the sidelink configuration information of the first terminal device that cannot be understood by the second network device, and prevent fullConfig handover from being triggered.

According to a fifth aspect, a communication method is provided. The method may be performed by a chip or a chip system on a terminal device side. The method is applicable to a process of handing over a first terminal device from a first cell to a second cell. The method includes: A second terminal device receives second configuration information sent by a first network device. The second terminal device communicates with the first network device via a wireless network, and the second terminal device communicates with the first terminal device through a first sidelink. The second terminal device is configured to provide a function needed for communication between the first terminal device and the first network device. The second terminal device releases the first sidelink based on the second configuration information. The second configuration information does not include a related configuration of the second terminal device serving as a relay of the first terminal device, and the second configuration information is a related configuration of a relay reconfigured by the first network device for the second terminal device. Optionally, the second cell may be a cell served by the first network device, or the second cell may be a cell served by a second network device.

According to the foregoing technical solution, when the first network device determines to hand over the first terminal device from the first cell to the second cell, the first network device sends the second configuration information to the second terminal device. The second configuration information does not include the related configuration of the second terminal device serving as the relay of the first terminal device. The second terminal device receives the second configuration information sent by the first network device, and releases the first sidelink between the second terminal device and the first terminal device based on the second configuration information. The first terminal device is a remote UE, and the second terminal device is a relay UE. The first cell is the cell served by the first network device, and the second cell may be the cell served by the first network device or may be the cell served by the second network device. Therefore, in this embodiment of this application, inter-cell/inter-base station handover of the remote UE in a U2N relay scenario can be implemented.

According to a sixth aspect, a communication method is provided. The method may be performed by a chip or a chip system on a terminal device side. The method is applicable to a process of handing over a first terminal device from a first cell to a second cell. The method includes: The first terminal device receives first configuration information sent by a first network device. The first configuration information is used by the first terminal device to perform the handover from the first cell to the second cell. A second terminal device communicates with the first network device via a wireless network, and the second terminal device is configured to provide a function needed for communication between the first terminal device and the first network device. The first cell is a cell served by the first network device. The first terminal device performs the handover from the first cell to the second cell based on the first configuration information. According to this solution, inter-cell/inter-base station handover of a remote UE in a U2N relay scenario can be implemented.

With reference to the sixth aspect, in some implementations of the sixth aspect, before the first terminal device receives the first configuration information sent by the first network device, the method further includes: The first terminal device sends measurement report information to the first network device. The measurement report information is used by the first network device to determine to hand over the first terminal device from the first cell to the second cell. The measurement report information includes signal strength of a third terminal device and/or capability information of the third terminal device that are/is obtained by the first terminal device through measurement, and the capability information of the third terminal device indicates whether the third terminal device supports multi-path. When determining that the first terminal device needs to be handed over from the first cell to the second cell, the first network device may determine a target terminal device in the third terminal device based on the signal strength of the third terminal device and/or the capability information of the third terminal device that are/is obtained by the first terminal device through measurement in the measurement report information sent by the first terminal device. The target terminal device is configured to provide a function needed for communication between the first terminal device and the second cell.

With reference to the sixth aspect, in some implementations of the sixth aspect, that the first terminal device performs the handover from the first cell to the second cell based on the first configuration information includes: The first terminal device establishes a direct link between the first terminal device and the second cell based on the first configuration information. The first terminal device may communicate with the second cell through the direct link.

With reference to the sixth aspect, in some implementations of the sixth aspect, the first configuration information further includes an identifier of a target terminal device, and the target terminal device is configured to provide a function needed for communication between the first terminal device and the second cell. The third terminal device includes the target terminal device. That the first terminal device performs the handover from the first cell to the second cell based on the first configuration information includes: The first terminal device establishes a second sidelink between the first terminal device and the target terminal device based on the first configuration information. The first terminal device may communicate with the second cell through the second sidelink. With reference to the sixth aspect, in some implementations of the sixth aspect, before the first terminal device sends the measurement report information to the first network device, the method further includes: The first terminal device receives the capability information of the third terminal device from the third terminal device.

According to a seventh aspect, a communication method is provided. The method may be performed by a chip or a chip system on a network device side. The method is applicable to a process of handing over a first terminal device from a first cell to a second cell. The method includes: A first network device determines to hand over the first terminal device from the first cell to the second cell. A second terminal device communicates with the first network device via a wireless network, and the second terminal device communicates with the first terminal device through a first sidelink. The second terminal device is configured to provide a function needed for communication between the first terminal device and the first network device. The first cell is a cell served by the first network device. The first network device sends second configuration information to the second terminal device. The second configuration information does not include a related configuration of the second terminal device serving as a relay of the first terminal device, and the second configuration information is a related configuration of a relay reconfigured by the first network device for the second terminal device. Optionally, the second cell may be a cell served by the first network device, or the second cell may be a cell served by a second network device.

According to the foregoing technical solution, when the first network device determines to hand over the first terminal device from the first cell to the second cell, the first network device sends the second configuration information to the second terminal device. The second configuration information indicates the related configuration of the second terminal device reconfigured as the relay of the first terminal device. The second terminal device receives the second configuration information sent by the first network device, and releases the first sidelink between the second terminal device and the first terminal device based on the second configuration information. The first terminal device is a remote UE, and the second terminal device is a relay UE. The first cell is the cell served by the first network device, and the second cell may be the cell served by the first network device or may be the cell served by the second network device. Therefore, in this embodiment of this application, inter-cell/inter-base station handover of the remote UE in a U2N relay scenario can be implemented.

With reference to the seventh aspect, in some implementations of the seventh aspect, before the first network device determines to hand over the first terminal device from the first cell to the second cell, the method further includes: The first network device receives measurement report information sent by the first terminal device. The measurement report information is used by the first network device to determine to hand over the first terminal device from the first cell to the second cell. The measurement report information includes signal strength of a third terminal device and/or capability information of the third terminal device that are/is obtained by the first terminal device through measurement, and the capability information of the third terminal device indicates whether the third terminal device supports multi-path. When determining that the first terminal device needs to be handed over from the first cell to the second cell, the first network device may determine a target terminal device in the third terminal device based on the signal strength of the third terminal device and/or the capability information of the third terminal device that are/is obtained by the first terminal device through measurement in the measurement report information sent by the first terminal device. The target terminal device is configured to provide a function needed for communication between the first terminal device and the second cell.

With reference to the seventh aspect, in some implementations of the seventh aspect, the method further includes: The first network device sends a handover request message to the second network device. The handover request message indicates to hand over the first terminal device from the first cell to the second cell, and the handover request message includes related information of the third terminal device that is obtained by the first terminal device through measurement. The second cell is the cell served by the second network device. The third terminal device is a terminal device served by the second cell or the second network device. The first network device receives a handover request acknowledgement message sent by the second network device. The handover request acknowledgement message includes an identifier of a target terminal device, and the target terminal device is determined by the second network device in the third terminal device. The target terminal device is configured to provide a function needed for communication between the first terminal device and the second network device. The first network device sends first configuration information to the first terminal device. The first configuration information is used to by the first terminal device to perform the handover from the first cell to the second cell. The first configuration information includes the identifier of the target terminal device. The handover request message sent by the first network device to the second network device includes the related information of the third terminal device that is obtained by the first terminal device through measurement. The second network device may determine the target terminal device in the third terminal device based on the related information of the third terminal device. It should be understood that there are one or more third terminal devices.

With reference to the seventh aspect, in some implementations of the seventh aspect, the related information of the third terminal device includes capability information of the third terminal device. The capability information of the third terminal device indicates whether the third terminal device supports multi-path. According to the foregoing solution, the handover request message sent by the first network device to the second network device includes the capability information of the third terminal device, so that a case in which the target terminal device determined by the second network device is not applicable can be avoided.

With reference to the seventh aspect, in some implementations of the seventh aspect, before the first network device sends the second configuration information to the second terminal device, the method further includes: The first network device sends a handover request message to the second network device. The handover request message indicates to hand over the first terminal device from the first cell to the second cell, and the handover request message includes an identifier of a target terminal device. The target terminal device is determined by the first network device in the third terminal device, and the target terminal device is configured to provide a function needed for communication between the first terminal device and the second network device. The second cell is the cell served by the second network device. The first network device receives a handover request acknowledgement message sent by the second network device. The first network device sends first configuration information to the first terminal device. The first configuration information is used by the first terminal device to perform the handover from the first cell to the second cell. The first configuration information includes the identifier of the target terminal device. In this implementation, the first network device determines the target terminal device. The handover request message sent by the first network device to the second network device includes the identifier of the target terminal device, and notifies the second network device of a specific terminal device (relay UE) via which the second network device communicates with the first terminal device.

With reference to the seventh aspect, in some implementations of the seventh aspect, when the first network device determines that capability information of the second network device is not obtained or the capability information of the second network device does not match capability information of the first network device, the handover request message does not include sidelink configuration information of the first terminal device. The capability information of the first network device indicates whether the first network device supports the multi-path, and the capability information of the second network device indicates whether the second network device supports the multi-path.

According to the foregoing solution, when the first network device determines that the capability information of the second network device is not obtained or the capability information of the second network device does not match the capability information of the first network device, the handover request message sent by the first network device to the second network device does not include the sidelink configuration information of the first terminal device. This can prevent the handover request message from carrying the sidelink configuration information of the first terminal device that cannot be understood by the second network device, and prevent fullConfig handover from being triggered.

According to an eighth aspect, a communication apparatus is provided. The apparatus may be used in the first terminal device according to the first aspect. The apparatus includes: a transceiver unit, configured to implement receiving and sending functions in the method according to the first aspect; and a processing unit, configured to implement a processing function like release in the method according to the first aspect.

According to a ninth aspect, a communication apparatus is provided. The apparatus may be used in the first network device according to the second aspect. The apparatus includes: a transceiver unit, configured to implement receiving and sending functions in the method according to the second aspect; and a processing unit, configured to implement a processing function, for example, determining that capability information of the second network device is not obtained or that the capability information of the second network device does not match capability information of the first network device, in the method according to the second aspect.

According to a tenth aspect, a communication apparatus is provided. The apparatus may be used in the first terminal device according to the third aspect. The apparatus includes: a processing unit, configured to implement a processing function like release in the method according to the third aspect; and a transceiver unit, configured to implement receiving and sending functions in the method according to the third aspect.

According to an eleventh aspect, a communication apparatus is provided. The apparatus may be used in the first network device according to the fourth aspect. The apparatus includes: a processing unit, configured to implement a processing function like handover in the method according to the fourth aspect; and a transceiver unit, configured to implement receiving and sending functions in the method according to the fourth aspect.

According to a twelfth aspect, a communication apparatus is provided. The apparatus may be used in the second terminal device according to the fifth aspect. The apparatus includes: a transceiver unit, configured to implement receiving and sending functions in the method according to the fifth aspect; and a processing unit, configured to implement a processing function like release in the method according to the fifth aspect.

According to a thirteenth aspect, a communication apparatus is provided. The apparatus may be used in the first terminal device according to the sixth aspect. The apparatus includes: a transceiver unit, configured to implement receiving and sending functions in the method according to the sixth aspect; and a processing unit, configured to implement a processing function like handover in the method according to the sixth aspect.

According to a fourteenth aspect, a communication apparatus is provided. The apparatus may be used in the first network device according to the seventh aspect. The apparatus includes: a processing unit, configured to implement a function like handover in the method according to the seventh aspect; and a transceiver unit, configured to implement receiving and sending functions in the method according to the seventh aspect.

According to a fifteenth aspect, a communication device is provided, and includes a processor and a transceiver. The transceiver is configured to: receive computer code or instructions, and transmit the computer code or the instructions to the processor. The processor runs the computer code or the instructions, to perform the method according to any one of the first aspect to the seventh aspect or the possible implementations of the first aspect to the seventh aspect.

According to a sixteenth aspect, a communication system is provided, and includes: the first terminal device in the method according to the first aspect, the third aspect, or the sixth aspect, and another communication device that communicates with the first terminal device; the first network device in the method according to the second aspect, the fourth aspect, or the seventh aspect, and another communication device that communicates with the first network device; and the second terminal device in the manner according to the fifth aspect and another communication device that communicates with the second terminal device.

According to a seventeenth aspect, a computer-readable storage medium is provided. The computer-readable storage medium stores a computer program. When the computer program is run on a computer, the method according to any one of the first aspect to the seventh aspect or the possible implementations of the first aspect to the seventh aspect is performed.

According to an eighteenth aspect, a computer program product is provided, and includes a computer program. When the computer program is executed, the communication method according to any one of the first aspect to the seventh aspect or the possible implementations of the first aspect to the seventh aspect is implemented.

The solutions provided in the eighth aspect to the eighteenth aspect are used to implement or cooperate to implement the methods provided in the first aspect to the seventh aspect, and therefore, can achieve beneficial effects the same as or corresponding to those in the first aspect to the seventh aspect. Details are not described herein again.

### BRIEF DESCRIPTION OF DRAWINGS

FIG. 1 is a diagram of a sidelink;
FIG. 2 is a diagram of a user plane protocol stack of an L2 U2N relay;
FIG. 3 is a diagram of a control plane protocol stack of an L2 U2N relay;
FIG. 4 is a diagram of different U2N relay coverage scenarios;
FIG. 5 is a diagram of multi-path of a U2N relay;
FIG. 6 is a schematic interaction flowchart of handing over a UE between gNBs;
FIG. 7 is a schematic interaction flowchart of switching a UE from a relay link on which the UE is connected to a network via a relay UE to a direct Uu link;
FIG. 8 is a schematic interaction flowchart of switching a UE from a direct Uu link to a relay link on which the UE is connected to a network via a relay UE;
FIG. 9 is a diagram of a network architecture to which a communication method according to an embodiment of this application is applied;
FIG. 10 is a schematic interaction flowchart of a communication method according to an embodiment of this application;
FIG. 11 is a schematic interaction flowchart of an example of a communication method according to an embodiment of this application;
FIG. 12 is a schematic interaction flowchart of a communication method according to an embodiment of this application;
FIG. 13 is a schematic interaction flowchart of an example of a communication method according to an embodiment of this application;
FIG. 14 is a schematic interaction flowchart of a communication method according to an embodiment of this application;
FIG. 15 is a schematic interaction flowchart of an example of a communication method according to an embodiment of this application;
FIG. 16 is a diagram of a structure of a communication apparatus according to an embodiment of this application;
FIG. 17 is a diagram of a structure of another communication apparatus according to an embodiment of this application;
FIG. 18 is a diagram of a structure of another communication apparatus according to an embodiment of this application;
FIG. 19 is a diagram of a structure of another communication apparatus according to an embodiment of this application;
FIG. 20 is a diagram of a structure of another communication apparatus according to an embodiment of this application;
FIG. 21 is a diagram of a structure of another communication apparatus according to an embodiment of this application;
FIG. 22 is a diagram of a structure of another communication apparatus according to an embodiment of this application; and
FIG. 23 is a block diagram of a communication device according to an embodiment of this application.

### DESCRIPTION OF EMBODIMENTS

The following describes technical solutions of this application with reference to the accompanying drawings.

Embodiments of this application may be applied to various communication systems, for example, a long term evolution (long term evolution, LTE) system, satellite communication, a sidelink (sidelink, SL), a 5th generation (5th generation, 5G) system, a 6th generation (6th generation, 6G) system, or a new communication system that appears in the future.

A terminal device in embodiments of this application may include various handheld devices, vehicle-mounted devices, wearable devices, or computing devices that have a wireless communication function, or other processing devices connected to a wireless modem. The terminal may be a subscriber unit (subscriber unit), a user equipment (user equipment, UE), a cellular phone (cellular phone), a smartphone (smartphone), a wireless data card, a personal digital assistant (personal digital assistant, PDA) computer, a tablet computer, a wireless modem (modulator demodulator, modem), a laptop computer (laptop computer), a machine type communication (machine type communication, MTC) terminal, a wireless terminal in self driving (self driving), or the like. The user equipment includes a vehicle user equipment. With emergence of an internet of things (internet of things, IOT) technology, more devices that previously do not have a communication function, for example, but not limited to, a household appliance, a transportation vehicle, a tool device, a service device, and a service facility, start to obtain a wireless communication function by being configured with a wireless communication unit, to access a wireless communication network, and accept remote control. Such a device has the wireless communication function because the device is configured with the wireless communication unit, and therefore also belongs to a scope of wireless communication devices. In addition, the terminal device may also be referred to as a mobile station (mobile station, MS), a mobile device, a mobile terminal, a wireless terminal, a handheld device (handset), a client, or the like.

For example, a network device may be an evolved NodeB (evolved NodeB, eNB), a radio network controller (radio network controller, RNC), a NodeB (NodeB, NB), a base station controller (base station controller, BSC), a base transceiver station (base transceiver station, BTS), a home evolved NodeB (home evolved NodeB, or home NodeB, HNB), a baseband unit (baseband unit, BBU), a device that undertakes a base station function in device-to-device (device-to-device, D2D), an access point (access point, AP) in a wireless fidelity (wireless fidelity, Wi-Fi) system, a wireless relay node, a wireless backhaul node, a transmission point (transmission point, TP), a transmission reception point (transmission reception point, TRP), or the like, or may be a gNB or a transmission point (for example, a TRP or a TP) in NR or one or a group of (including a plurality of) antenna panels of a base station in NR, or may be a network node included in the gNB or the transmission point, for example, a baseband unit (baseband unit, BBU) or a distributed unit (distributed unit, DU). Alternatively, the network device may be a vehicle-mounted device, a wearable device, a network device in a 6G network, a network device in a future evolved PLMN network, a network device deployed on a satellite, or the like. This is not limited. In addition, based on a size of a provided service coverage area, base stations may also be classified into a macro base station configured to provide a macro cell (macro cell), a micro base station configured to provide a pico cell (pico cell), and a femto base station configured to provide a femto cell (femto cell). With evolution of a wireless communication technology, a future base station may also use another name.

The network device has abundant product forms. For example, in a product implementation process, the BBU and a radio frequency unit (radio frequency unit, RFU) may be integrated in a same device, and the device is connected to an antenna array through a cable (for example, but not limited to, a feeder). Alternatively, the BBU and the RFU may be separately disposed, and the BBU and the RFU are connected through an optical fiber, and communicate with each other by using, for example, but not limited to, a common public radio interface (common public radio interface, CPRI) protocol. In this case, the RFU is usually referred to as a remote radio unit (remote radio unit, RRU), and is connected to the antenna array through the cable. In addition, the RRU may further be integrated with the antenna array. For example, an active antenna unit (active antenna unit, AAU) product in the market currently uses this structure.

In addition, the BBU may be further decomposed into a plurality of parts. For example, the BBU may be further subdivided into a central unit (central unit, CU) and a distributed unit (distributed unit, DU) based on real-time performance of a processed service. The CU processes non-real-time protocols and services, and the DU processes physical-layer protocols and real-time services. Further, some physical layer functions may be separated from the BBU or the DU and integrated into the AAU.

In a wireless communication system, UEs may communicate with each other via a network, or may directly communicate with each other without a network device. A direct communication interface between the UEs is referred to as a PC5 interface, and is similar to a Uu interface between the UE and the network. A link between the UEs is referred to as a sidelink. The sidelink is different from an uplink (uplink) or a downlink (downlink), and is a communication mechanism in which the UEs directly communicate with each other without via a base station.

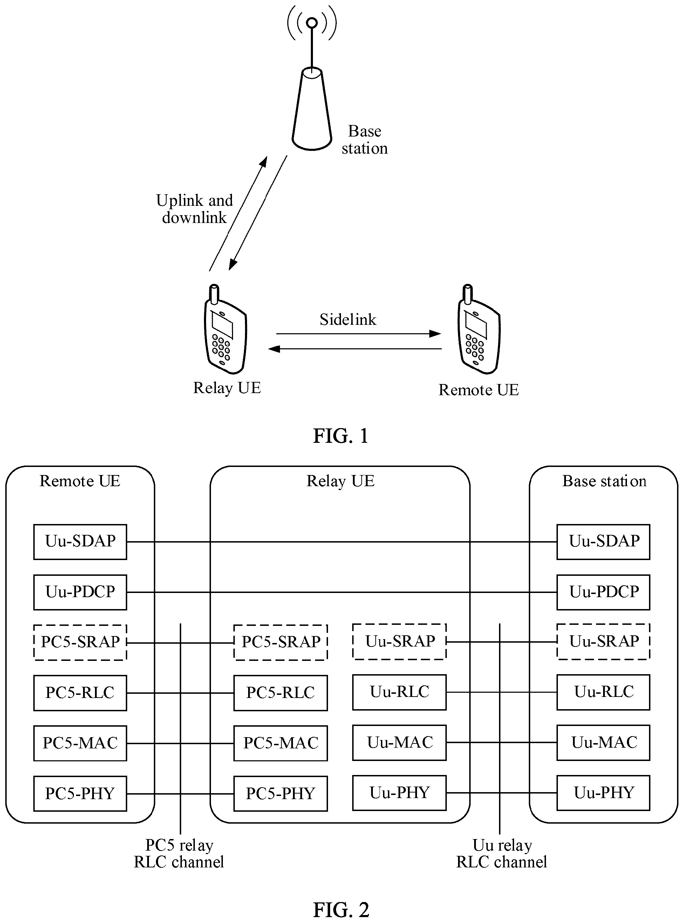

To expand network coverage and reduce power consumption of the UE, a relay (relay) UE is used between the UE and the network (network). If the remote (remote) UE is located at an edge of the network coverage or is not within the network coverage, the remote UE may communicate with the network by using a function provided by the relay UE, to communicate with the network. The remote UE communicates with the relay UE through the PC5 interface, and the relay UE communicates with the network through the Uu interface. FIG. 1 is a diagram of the sidelink.

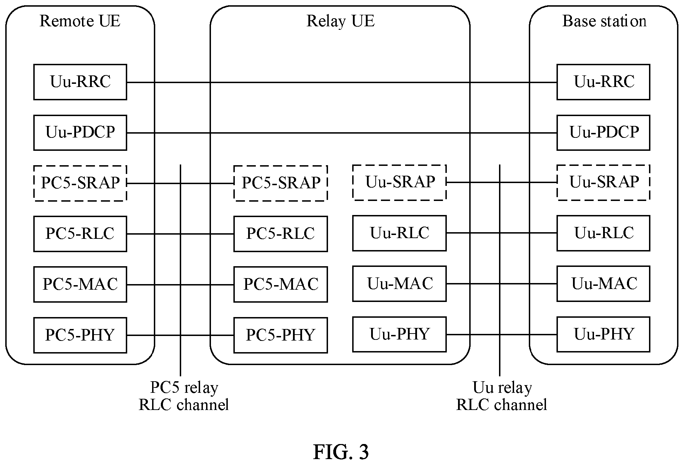

A user equipment-to-network (UE-to-network, U2N) relay function means that the relay UE provides a connection to the network for the remote UE, and includes a layer 3 (layer 3, L3) relay and a layer 2 (layer 2, L2) relay. For an L2 U2N relay, both a user plane adaptation layer and a control plane adaptation layer are placed above a radio link control (radio link control, RLC) layer of a Uu interface between the relay UE and the gNB, and a data packet of the relay UE is relayed and forwarded below a PDCP layer. In other words, the relay UE maintains only a radio link control (radio link control, RLC) bearer of the relay. The RLC bearer includes an RLC layer, a media access control (media access control, MAC) layer, and a physical layer (physical layer, PHY). Therefore, there are only end-to-end PDCP, SDAP, and radio resource control (radio resource control, RRC) layers between the remote UE and the base station. In addition, for bearer multiplexing and demultiplexing, a sidelink adaptation protocol (sidelink relay adaptation protocol, SRAP) layer is further added between the RLC layer and the PDCP layer in an architecture of the L2 U2N relay. Specifically, the SRAP layer may multiplex a plurality of different bearers onto one bearer, or split one bearer into different bearers. FIG. 2 is a diagram of a user plane protocol stack of the L2 U2N relay. FIG. 3 is a diagram of a control plane protocol stack of the L2 U2N relay.

An L3 U2N relay is a relay based on an internet protocol (internet protocol, IP) layer.

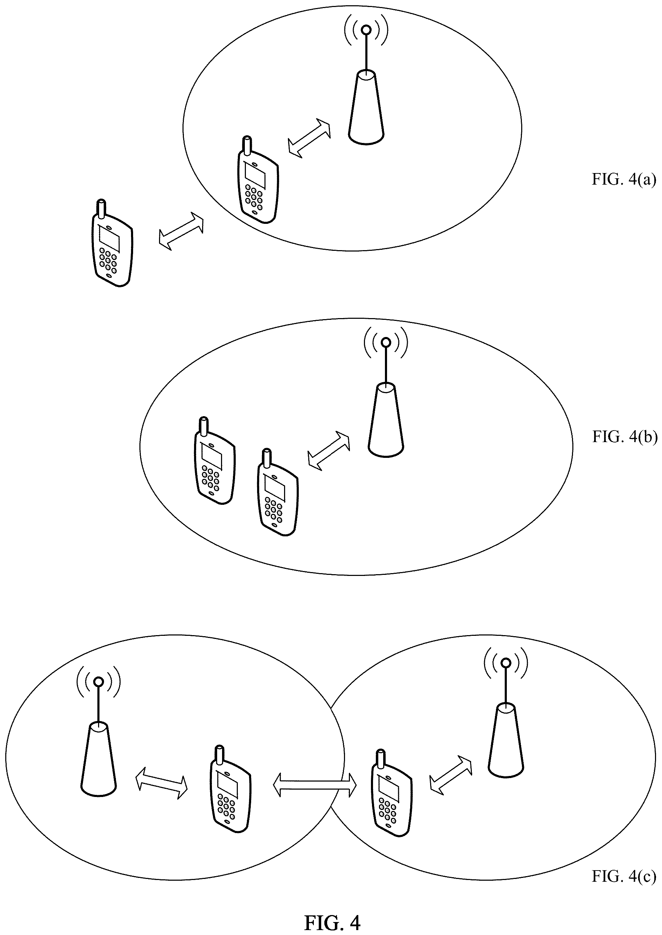

There are three U2N relay coverage scenarios. FIG. 4 is a diagram of different U2N relay coverage scenarios. In FIG. 4 (a), the relay UE is within the network coverage, and the remote UE is out of the network coverage. In FIG. 4 (b), both the relay UE and the remote UE are within the network coverage. In FIG. 4 (c), the relay UE and the remote UE are in different cells. For the L3 U2N relay, after the remote UE establishes a connection via the relay UE, the relay UE and the remote UE may be in a same cell, or may be in different cells. For the L2 U2N relay, after the remote UE establishes a connection via the relay UE, both the relay UE and the remote UE are controlled by a serving cell of the relay UE. In addition, before the remote UE establishes a connection to the relay UE, the relay UE and the remote UE may be in a same cell, or may be in different cells.

In U2N relay enhancement, the U2N relay needs to support multi-path (multi-path). The multi-path not only can expand the coverage, but also can improve a throughput and reliability.

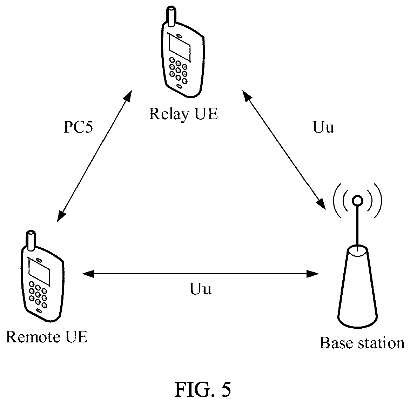

FIG. 5 is a diagram of the multi-path of the U2N relay. A remote UE communicates with a base station through a PC5 interface, and also communicates with the base station through a Uu interface. That a remote UE communicates with the base station through a PC5 interface may be understood as that the remote UE establishes a sidelink connection to a relay UE, and the relay UE provides a function to support the remote UE in communicating with the base station.

For ease of understanding embodiments of this application, an existing handover (handover, HO) technology is briefly described below.

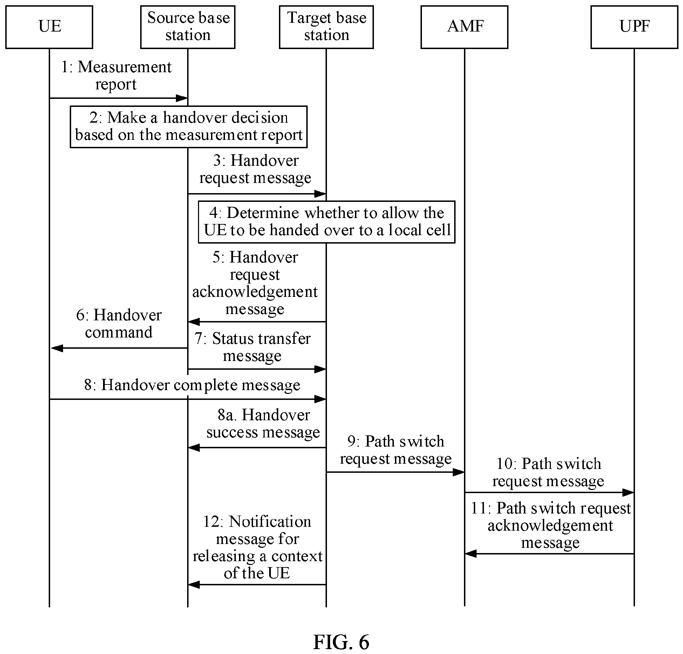

In an NR handover technology, a 5G core network does not need to participate in preparation and execution phases of air interface handover in NR. That is, the preparation message is directly exchanged between gNBs. In a handover complete phase, release of resources of a source gNB is triggered by a target base station. FIG. 6 is a schematic interaction flowchart of handing over a UE between gNBs. The handover process includes the following steps.

Step 1: The UE sends a measurement report to a source base station.

Step 2: The source base station makes a handover decision/resolution based on the measurement report reported by the UE.

Step 3: The source base station sends a handover request (HO request) message to the target base station. The handover request message includes information like an identifier (identifier, ID) of a target cell.

Step 4: The target base station performs admission control, and determines whether to allow the UE to be handed over to a local cell.

Step 5: If the handover is allowed, the target base station returns a handover request acknowledgement message, namely, an acknowledgement (acknowledgement, ACK) message, to the source base station. The handover request acknowledgement message includes radio resource control (radio resource control, RRC) information for the UE.

Step 6: The source base station delivers a handover command (handover command, HO CMD) to the UE. The handover command includes information like the ID of the target cell.

Step 7a: If a data radio bearer (data radio bearer, DRB) is configured with a dual active protocol stack (dual active protocol stack, DAPS), the source base station sends an early status transfer (early status transfer) message to the target base station.

Step 7: The source base station sends a sequence number (sequence number, SN) status transfer (status transfer) message to the target base station, to notify specific packet data convergence protocol (packet data convergence protocol, PDCP) service data unit (service data unit, SDU) data packets that are received and specific PDCP SDU data packets that are not received.

Step 8: After receiving the HO CMD, the UE immediately disconnects from the source base station, and attempts to access the target base station. If the access succeeds, the UE sends an HO complete (HO complete) message to the target base station.

Step 8a: The target base station sends a handover success message to the source base station.

Step 8b: The source base station sends the SN status transfer message to the target base station again.

Step 9: The target base station sends a path switch request message to an access and mobility management function (access and mobility management function, AMF), to request to change a forwarding address of downlink data, so that the AMF subsequently sends a downlink data packet of the UE to the target base station instead of the source base station.

Step 10: After receiving the path switch request message, the AMF notifies a user plane function (user plane function, UPF) to perform path switching.

Step 11: If the path switching succeeds, the AMF returns a path switch request acknowledgement message to the target base station.

Step 12: After the UE successfully accesses the target base station, the target base station sends, to the source base station, a notification message for releasing a context (context) of the UE, so that the source base station releases the context of the UE.

To ensure continuity of an L2 U2N relay service, a remote UE may need to perform path switching, including two types of switching. In a first type of path switching, the remote UE is switched from a relay link on which the remote UE is connected to a network via a relay UE to a direct Uu link. In other words, the remote UE is directly connected to the base station, and a corresponding interface is a Uu interface. In a second type of path switching, the remote UE is switched from a direct Uu link to a relay link on which the remote UE is connected to a network via a relay UE.

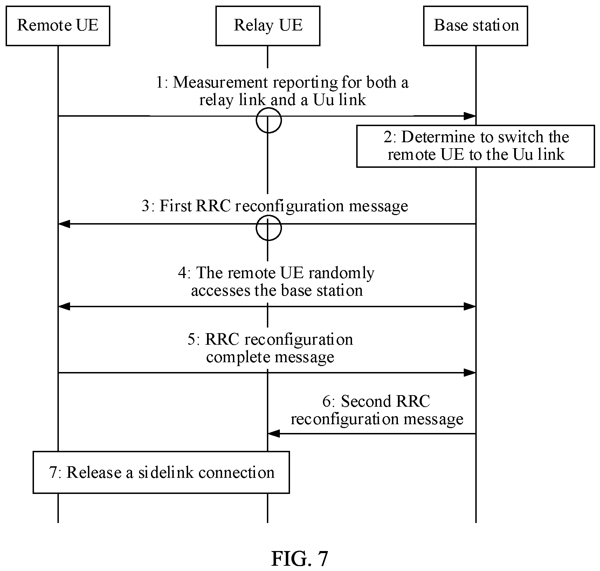

FIG. 7 is a schematic interaction flowchart of switching a UE from a relay link on which the UE is connected to a network via a relay UE to a direct Uu link. The switching process includes the following steps.

Step 1: In a measurement reporting process, measurement reporting is needed for both the relay link and the Uu link.

Step 2: A base station determines to switch the U2N remote UE to the direct Uu link.

Step 3: The base station sends a first RRC reconfiguration message to the remote UE. After receiving the first RRC reconfiguration message, the remote UE stops performing user plane and control plane transmission via the relay UE.

Step 4: The remote UE randomly accesses the base station.

Step 5: The remote UE sends an RRC reconfiguration complete message to the base station through the direct link.

Step 6: The base station sends a second RRC reconfiguration message to the relay UE, to reconfigure a connection between the relay UE and the base station.

Step 7: Release a sidelink connection between the remote UE and the relay UE. This step may be performed by the remote UE after step 3, or may be performed by the relay UE after step 6.

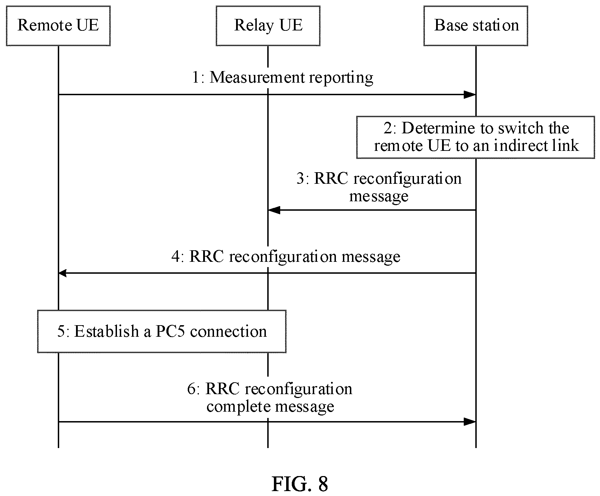

FIG. 8 is a schematic interaction flowchart of switching a UE from a direct Uu link to a relay link on which the UE is connected to a network via a relay UE. The switching process includes the following steps.

Step 1: In a measurement reporting process, the remote UE reports one or more candidate relay UEs and measurement performed on the Uu link.

Step 2: A base station determines to switch the remote UE to an indirect link.

Step 3: Send an RRC reconfiguration message to a relay UE. The relay UE is a target relay UE.

Step 4: The base station sends an RRC reconfiguration message to the remote UE. The RRC reconfiguration message includes information like an ID of the relay UE.

Step 5: The remote UE establishes a PC5 connection to the relay UE.

Step 6: The remote UE sends an RRC reconfiguration complete message to the base station via the relay UE.

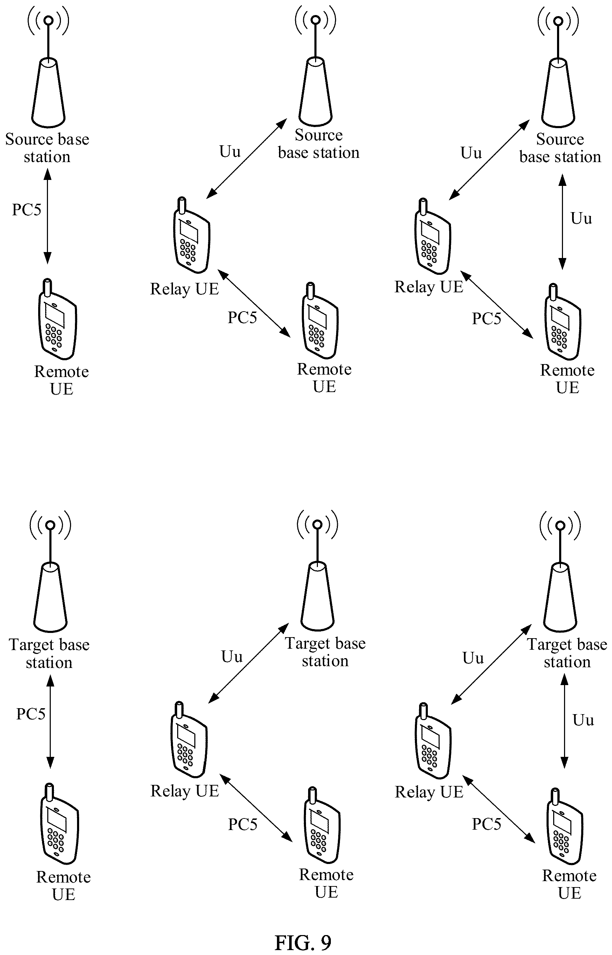

The foregoing describes the existing HO technology. The following describes an application scenario of the communication method provided in embodiments of this application. Embodiments of this application are applicable to inter-cell/inter-base station handover of a terminal device in a U2N relay scenario. FIG. 9 is a diagram of a network architecture to which a communication method according to an embodiment of this application is applied. A terminal device of a source base station/source cell is connected to a network through a direct link, an indirect link, or a multi-path link. After the terminal device is handed over to a target base station/target cell, the terminal device is connected to the network through a direct link, an indirect link, or a multi-path link. There are a total of eight scenarios in which every two of links on a source base station side and a target base station side/a source cell side and a target cell side are combined, including a scenario of switching from a multi-path link to a direct link, an indirect link, or a multi-path link, a scenario of switching from an indirect link to a direct link, an indirect link, or a multi-path link, and a scenario of switching from a direct link to an indirect link or a multi-path link, but excluding a scenario of switching from a direct link to a direct link.

The source base station/source cell is a base station/cell originally accessed by the terminal device, and the target base station/target cell is a base station/cell newly accessed by the terminal device. The indirect link may be understood as a relay link for connecting the terminal device to the network via a relay UE, and the direct link may be understood as a Uu link.

Currently, in a U2N relay scenario in which the remote UE communicates with the network by using the function provided by the relay UE, when the remote UE needs inter-base station/inter-cell handover, that is, when the remote UE needs to be handed over from a currently connected source base station to a target base station or from a currently connected first cell to a second cell, problems such as a manner of releasing a sidelink between the remote UE and a currently connected relay UE, how to determine a target relay UE to which the remote UE is to be connected, and a specific link used by the remote UE to communicate with the second cell after the handover need to be urgently resolved.

Therefore, an embodiment of this application provides a communication method. When a remote UE needs to be handed over from a currently connected source base station to a target base station or from a currently connected first cell to a second cell, this method can resolve problems such as a manner of releasing a sidelink between the remote UE and a currently connected relay UE, determining of a target relay UE to which the remote UE is to be connected, and a link to be used by the remote UE to communicate with the second cell after the handover. In this way, inter-cell/inter-base station handover of the remote UE in a U2N relay scenario can be implemented. In this embodiment of this application, a first terminal device is the remote UE, a second terminal device is the relay UE to which the remote UE is connected before the handover, a target terminal device is the relay UE (target relay UE) to which the remote UE is connected after the handover, a first network device is the source base station, a second network device is the target base station, the first cell is a serving cell of the remote UE before the handover, and the second cell is a serving cell of the remote UE after the handover. The first network device and the second network device may be base stations.

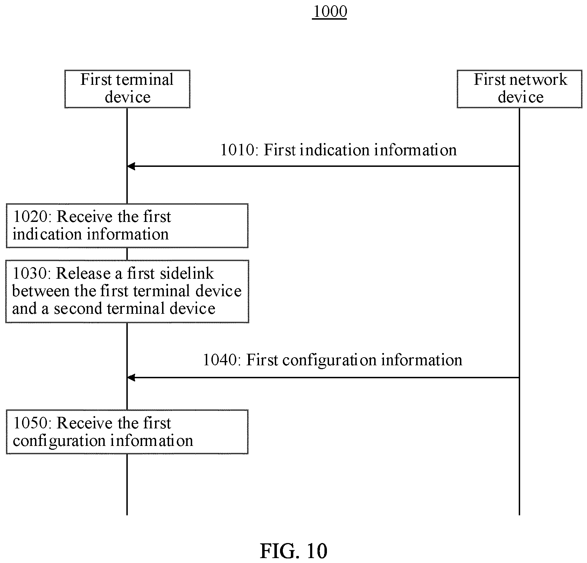

FIG. 10 is a schematic interaction flowchart of a communication method 1000 according to an embodiment of this application. This manner is applicable to a process of handing over a first terminal device from a first cell to a second cell. In this embodiment, when a first network device determines to hand over the first terminal device from the first cell to the second cell, the first network device directly indicates the first terminal device to release a first sidelink between the first terminal device and the second terminal device.

1010: The first network device determines to hand over the first terminal device from the first cell to the second cell, and the first network device sends first indication information to the first terminal device. The first indication information indicates the first terminal device to release the first sidelink between the first terminal device and the second terminal device. The second terminal device communicates with the first network device via a wireless network. The second terminal device is configured to provide a function needed for communication between the first terminal device and the first network device. In other words, the second terminal device is configured to forward data of the first terminal device to communicate with the first network device. The first cell is a cell served by the first network device.

For example, the second cell may be a cell served by the first network device, or the second cell may be a cell served by a second network device. In other words, the first terminal device may perform inter-cell handover or inter-base station handover.

Optionally, the first terminal device sends measurement report information to the first network device. The measurement report information is used by the first network device to determine to hand over the first terminal device from the first cell to the second cell. The measurement report information includes information such as an identifier of the second terminal device, an identifier of the first cell, and signal strength of a third terminal device and/or capability information of the third terminal device and signal strength of the second terminal device that are obtained by the first terminal device through measurement. The capability information of the third terminal device indicates whether the third terminal device supports multi-path. It should be understood that the capability information of the third terminal device includes a release (release) version supported by the third terminal device. For example, a device of an R17 version supports the multi-path, and a device of an R16 version does not support the multi-path and supports only a relay link/an indirect link. The measurement report information may include capability information of one or more third terminal devices. The third terminal device is a terminal device whose signal strength determined by the first terminal device through measurement meets a preset condition. Correspondingly, the first network device receives the measurement report information sent by the first terminal device, and the first network device determines, based on the measurement report information, to hand over the first terminal device from the first cell to the second cell. It may be understood that the measurement report information may include information like the signal strength of the third terminal device. Optionally, the measurement report information may further include the capability information of the third terminal device.

For example, the signal strength obtained by the first terminal device through measurement may be information such as a reference signal received power (reference signal received power, RSRP) of a reference signal/signal to interference noise ratio (signal to interference noise ratio, SINR)/received signal strength indicator (received signal strength indicator, RSSI). This is not limited in this embodiment of this application.

Optionally, before the first terminal device sends the measurement report information to the first network device, the first terminal device receives the capability information of the third terminal device from the third terminal device.

For example, the capability information of the third terminal device may be actively sent by the third terminal device, for example, may be sent by the third terminal device through broadcast.

For example, the capability information of the third terminal device may be obtained from the third terminal device through request. For example, the first terminal device sends a first message to the third terminal device. The first message requests to obtain the capability information of the third terminal device. The third terminal device sends a second message to the first terminal device in response to the first message. The second message includes the capability information of the third terminal device or information used by the first terminal device to determine the capability information of the third terminal device. The first terminal device receives the second message sent by the third terminal device. The first message may be specifically a sidelink discovery request (sidelink discovery request) message, and the second message may be specifically a sidelink discovery response (sidelink discovery response) message.

When the second cell is the cell served by the second network device, in other words, when the first terminal device performs the inter-base station handover, optionally, when the first network device determines that the capability information of the second network device is not obtained or the capability information of the second network device does not match capability information of the first network device, the first network device sends the first indication information to the first terminal device. The capability information of the first network device indicates whether the first network device supports the multi-path, and the capability information of the second network device indicates whether the second network device supports the multi-path. The capability information of the second network device may be specifically a release (release) version supported by the second network device. For example, a device of an R17 version supports the multi-path, and a device of an R16 version does not support the multi-path. It should be understood that, when the first network device determines that the second network device supports the multi-path, the first network device may also send the first indication information to the first terminal device.

The first network device obtains the capability information of the second network device in a plurality of manners. For example, the first network device may directly exchange the respective capability information with the second network device. For another example, the measurement report information sent by the first terminal device includes capability information of different cells, so that the first network device can obtain the capability information of the second network device. Specifically, the capability information of the different cells may be obtained by the first terminal device through a system information block (system information block, SIB1) message broadcast by a system.

When the first terminal device performs the inter-base station handover, and the first network device determines that the capability information of the second network device is not obtained or the capability information of the second network device does not match the capability information of the first network device, the first network device sends, to the first terminal device, the first indication information indicating to release the first sidelink between the first terminal device and the second terminal device. After the first terminal device releases the first sidelink between the first terminal device and the second terminal device based on the first indication information, the first network device deletes sidelink configuration information of the first terminal device. This can prevent a handover request message sent by the first network device to the second network device from carrying the sidelink configuration information of the first terminal device that cannot be understood by the second network device, and prevent fullConfig handover from being triggered.

1020: The first terminal device receives the first indication information sent by the first network device.

1030: The first terminal device releases the first sidelink between the first terminal device and the second terminal device based on the first indication information.

When the first terminal device performs the inter-base station handover, optionally, after releasing the first sidelink between the first terminal device and the second terminal device, the first terminal device sends a release complete message to the first network device. The release complete message indicates that the first sidelink is successfully released. Correspondingly, the first network device receives the release complete message sent by the first terminal device.

1040: The first network device sends first configuration information to the first terminal device. The first configuration information is used by the first terminal device to perform the handover from the first cell to the second cell. The first configuration information includes an identifier of the second cell and a cell radio network temporary identifier C-RNTI of the first terminal device in the second cell.

When the first terminal device performs the inter-base station handover, in an implementation, before the first network device sends the first configuration information to the first terminal device, the first network device sends the handover request message to the second network device. The handover request message indicates to hand over the first terminal device from the first cell to the second cell. The handover request message may include the identifier of the second cell, the cell radio network temporary identifier of the first terminal device in the first cell, and related information of the third terminal device that is obtained by the first terminal device through measurement. The related information of the third terminal device includes the signal strength of the third terminal device. For example, the third terminal device is a terminal device served by the second cell or the second network device. It should be understood that the handover request message is sent to the second network device after the first network device receives the release complete message sent by the first terminal device. In this implementation, the second network device determines a link used by the first terminal device to communicate with the second network device after the inter-base station handover. If the second network device determines that the first terminal device communicates with the second network device through a relay link or a multi-path link, the second network device further needs to determine a target terminal device that is configured to provide a function needed for communication between the first terminal device and the second network device.

Optionally, the related information of the third terminal device may further include the capability information of the third terminal device. If the second network device determines that the first terminal device communicates with the second network device through the multi-path link, the target terminal device determined by the second network device needs to be a terminal device that supports the multi-path link. If the second network device determines that the first terminal device communicates with the second network device through the relay link, the target terminal device determined by the second network device needs to be a terminal device that supports the relay link. Therefore, the handover request message sent by the first network device to the second network device includes the capability information of the third terminal device, so that a case in which the target terminal device determined by the second network device is not applicable can be avoided.

Correspondingly, the second network device receives the handover request message sent by the first network device.

The second network device sends a handover request acknowledgement message to the first network device. The handover request acknowledgement message includes the cell radio network temporary identifier of the first terminal device in the second cell. Optionally, the handover request acknowledgement message sent by the second network device to the first network device further includes an identifier of the target terminal device. The target terminal device is determined by the second network device in the one or more third terminal devices based on the related information of the third terminal device. The target terminal device is configured to provide a function needed for communication between the first terminal device and the second network device. In other words, the target terminal device is configured to forward data of the first terminal device to communicate with the second network device.

Correspondingly, the first network device receives the handover request acknowledgement message sent by the second network device, and sends the first configuration information to the first terminal device. Optionally, the first configuration information sent by the first network device to the first terminal device further includes the identifier of the target terminal device, and the identifier is used by the first terminal device to establish a second sidelink between the first terminal device and the target terminal device.

It should be understood that, when the second network device determines that the first terminal device communicates with the second network device through only a Uu link after the inter-base station handover, the handover request acknowledgement message may not include the identifier of the target terminal device, and the first configuration information sent by the first network device to the first terminal device may either not include the identifier of the target terminal device. When the second network device determines that the first terminal device communicates with the second network device through the relay link or the multi-path link, the handover request acknowledgement message may include the identifier of the target terminal device, and the first configuration information sent by the first network device to the first terminal device may include the identifier of the target terminal device.

When the first terminal device performs the inter-base station handover, in another implementation, before the first network device sends the first configuration information to the first terminal device, the first network device sends the handover request message to the second network device. The handover request message indicates to hand over the first terminal device from the first cell to the second cell. The handover request message may include the identifier of the second cell and the cell radio network temporary identifier of the first terminal device in the first cell. Optionally, the handover request message further includes an identifier of a target terminal device. The target terminal device is determined by the first network device in the one or more third terminal devices based on the measurement report information sent by the first terminal device, and the target terminal device is configured to provide a function needed for communication between the first terminal device and the second network device. It should be understood that the handover request message is sent to the second network device after the first network device receives the release complete message sent by the first terminal device. In this implementation, the first network device determines a link used by the first terminal device to communicate with the second network device after the inter-base station handover. If the first network device determines that the first terminal device communicates with the second network device through a relay link or a multi-path link, the first network device further needs to determine a target terminal device that is configured to provide a function needed for communication between the first terminal device and the second network device

Correspondingly, the second network device receives the handover request message sent by the first network device.

The second network device sends a handover request acknowledgement message to the first network device. The handover request acknowledgement message includes the C-RNTI of the first terminal device in the second cell.

Correspondingly, the first network device receives the handover request acknowledgement message sent by the second network device, and sends the first configuration information to the first terminal device. Optionally, the first configuration information sent by the first network device to the first terminal device further includes the identifier of the target terminal device, and the identifier is used by the first terminal device to establish a second sidelink between the first terminal device and the target terminal device.

It should be understood that, when the first network device determines that the first terminal device communicates with the second network device through only a Uu link after the inter-base station handover, the handover request acknowledgement message may not include the identifier of the target terminal device, and the first configuration information sent by the first network device to the first terminal device may either not include the identifier of the target terminal device. When the first network device determines that the first terminal device communicates with the second network device through the relay link or the multi-path link, the handover request acknowledgement message may include the identifier of the target terminal device, and the first configuration information sent by the first network device to the first terminal device may include the identifier of the target terminal device.

Optionally, the second network device sends an RRC reconfiguration message to the target terminal device. The RRC reconfiguration message includes information like the identifier of the second cell. Correspondingly, the target terminal device receives the RRC reconfiguration message sent by the second network device, and sends an RRC reconfiguration success message to the second network device.

When the second cell is the cell served by the first network device, in other words, when the first terminal device does not perform the inter-base station handover, the first network device determines a link used by the first terminal device to communicate with the second cell after the inter-cell handover. Optionally, the first network device sends first configuration information to the first terminal device. The first configuration information includes an identifier of the second cell and a C-RNTI of the first terminal device in the second cell. Optionally, the first configuration information sent by the first network device to the first terminal device further includes an identifier of a target terminal device, and the identifier is used by the first terminal device to establish a second sidelink between the first terminal device and the target terminal device.

When the first network device determines that the first terminal device communicates with the second cell through the relay link or a multi-path link, the first network device further needs to determine a target terminal device that is configured to provide a function needed for communication between the first terminal device and the second cell. Specifically, the first network device determines the target terminal device in the one or more third terminal devices based on the measurement report information sent by the first terminal device, and the target terminal device is configured to provide a function needed for communication between the first terminal device and the second network device. If the first network device determines that the first terminal device communicates with the second cell through the multi-path link, the target terminal device determined by the first network device needs to be a terminal device that supports the multi-path link. If the first network device determines that the first terminal device communicates with the second cell through the relay link, the target terminal device determined by the first network device needs to be a terminal device that supports the relay link. In other words, when the first network device determines that the first terminal device communicates with the second cell through the relay link or the multi-path link, the first configuration information includes the identifier of the target terminal device. When the first network device determines that the first terminal device communicates with the second cell through the Uu link, the first configuration information does not include the identifier of the target terminal device.

1050: The first terminal device receives the first configuration information sent by the first network device. The first terminal device performs the handover from the first cell to the second cell based on the first configuration information.

Optionally, the first configuration information includes the identifier of the second cell and the C-RNTI of the first terminal device in the second cell, and the first configuration information indicates that the first terminal device communicates with the second cell through the direct link/only the Uu link. The first terminal device establishes a direct link between the first terminal device and the second cell based on the first configuration information. In other words, the first terminal device is handed over to the second cell through the direct link.

Optionally, the first configuration information includes the identifier of the second cell, the C-RNTI of the first terminal device in the second cell, and the identifier of the target terminal device. If the first configuration information indicates that the first terminal device communicates with the second cell through only the relay link, the first terminal device establishes the second sidelink between the first terminal device and the target terminal device based on the first configuration information, and the first terminal device is handed over to the second cell through the relay link. If the first configuration information indicates that the first terminal device communicates with the second cell through the multi-path link, the first terminal device establishes, based on the first configuration information, the second sidelink between the first terminal device and the target terminal device and the Uu link used for communication between the first terminal device and the second cell, and the first terminal device is handed over to the second cell through the multi-path link. For example, when the first terminal device performs the inter-base station handover, if the first configuration information indicates that the first terminal device communicates with the second cell through the multi-path link, the first terminal device establishes, based on the first configuration information, the second sidelink between the first terminal device and the target terminal device and a Uu link between the first terminal device and the second network device. The target terminal device communicates with the second cell via a wireless network.

Optionally, if the first terminal device is successfully handed over from the first cell to the second cell, the first terminal device sends a handover success notification message to a network device serving the second cell. For example, when the second cell is the cell served by the first network device, if the first terminal device is successfully handed over from the first cell to the second cell, the first terminal device sends the handover success notification message to the first network device. For example, when the second cell is the cell served by the second network device, if the first terminal device is successfully handed over from the first cell to the second cell, the first terminal device sends the handover success notification message to the second network device.

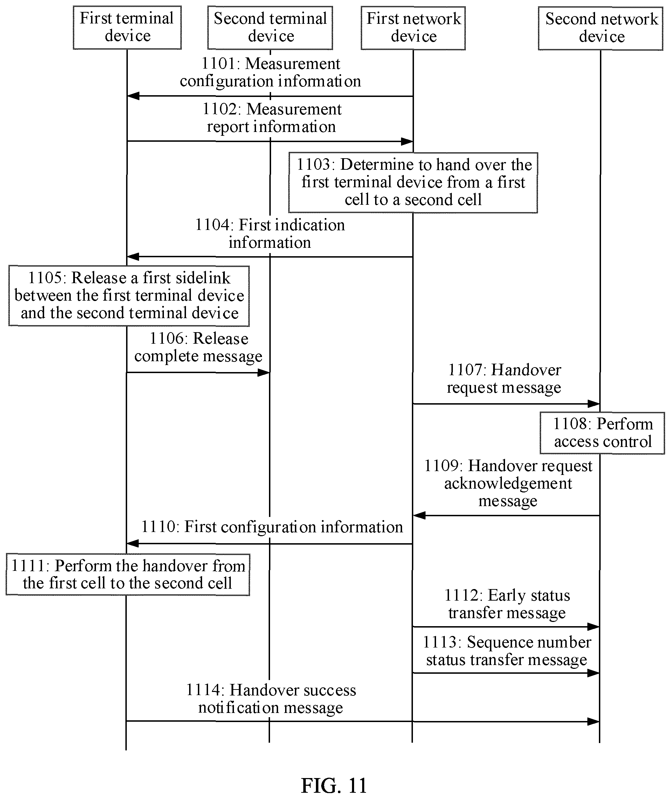

A case in which a first terminal device is handed over between base stations is used as an example below to specifically describe a process of handing over the first terminal device from a first cell to a second cell in the method embodiment in FIG. 10. FIG. 11 is a schematic interaction flowchart of an example of a communication method according to an embodiment of this application.

1101: A first network device configures measurement configuration information of a first terminal device based on information such as roaming and access restriction, and sends the measurement configuration information to a first terminal device. The measurement configuration information is used by the first terminal device to generate measurement report information and report the measurement report information to the first network device.

1102: The first terminal device generates the measurement report information based on the measurement configuration information. When a reporting condition is met, the first terminal device sends the measurement report information to the first network device. The measurement report information is used by the first network device to determine to hand over the first terminal device from a first cell to a second cell.

The measurement report information includes information such as an identifier of a second terminal device, an identifier of the first cell, and signal strength of a third terminal device and/or capability information of the third terminal device and signal strength of the second terminal device that are obtained by the first terminal device through measurement. The capability information of the third terminal device may indicate whether the third terminal device supports multi-path. The first terminal device communicates with the second terminal device through a first sidelink. The second terminal device communicates with the first network device via a wireless network, and the second terminal device is configured to provide a function needed for communication between the first terminal device and the first network device. In other words, the second terminal device is configured to forward data of the first terminal device to communicate with the first network device. The first cell is a cell served by the first network device. It should be understood that the capability information of the third terminal device may be specifically a release (release) version supported by the third terminal device. For example, a device of an R17 version supports the multi-path, and a device of an R16 version does not support the multi-path and supports only a relay link/an indirect link. The measurement report information may include capability information of one or more third terminal devices. The third terminal device is a terminal device whose signal strength determined by the first terminal device through measurement meets a preset condition. It should be understood that the measurement report information may include information like the signal strength of the third terminal device. Optionally, the measurement report information may further include the capability information of the third terminal device.

1103: The first network device receives the measurement report information sent by the first terminal device, and the first network device determines, based on the measurement report information, to hand over the first terminal device from the first cell to the second cell. Specifically, the first network device may determine, based on the measurement report information and radio resource measurement (radio resource measurement, RRM) information, to hand over the first terminal device from the first cell to the second cell. The second cell is a cell served by a second network device.

1104: When the first network device determines that capability information of the second network device is not obtained or the capability information of the second network device does not match capability information of the first network device, the first network device sends first indication information to the first terminal device. The first indication information indicates the first terminal device to release the first sidelink between the first terminal device and the second terminal device. The capability information of the first network device indicates whether the first network device supports the multi-path, and the capability information of the second network device indicates whether the second network device supports the multi-path. The capability information of the second network device includes a release version supported by the second network device. For example, a device of an R17 version supports the multi-path, and a device of an R16 version does not support the multi-path. It should be understood that, when the first network device determines that the second network device supports the multi-path, the first network device may also send the first indication information to the first terminal device.

The first network device obtains the capability information of the second network device in a plurality of manners. For example, the first network device may directly exchange the respective capability information with the second network device. For another example, the measurement report information sent by the first terminal device includes capability information of different cells, so that the first network device can obtain the capability information of the second network device. Specifically, the capability information of the different cells may be obtained by the first terminal device through a SIB1 message broadcast by a system.

When the first network device determines that the capability information of the second network device is not obtained or the capability information of the second network device does not match the capability information of the first network device, the first network device sends, to the first terminal device, the first indication information indicating to release the first sidelink between the first terminal device and the second terminal device. After the first terminal device releases the first sidelink between the first terminal device and the second terminal device based on the first indication information, the first network device deletes sidelink configuration information of the first terminal device. This can prevent a handover request message sent by the first network device to the second network device from carrying the sidelink configuration information of the first terminal device that cannot be understood by the second network device, and prevent fullConfig handover from being triggered.

1105: The first terminal device receives the first indication information sent by the first network device, and releases the first sidelink between the first terminal device and the second terminal device based on the first indication information.

1106: After releasing the first sidelink between the first terminal device and the second terminal device, the first terminal device sends a release complete message to the first network device. The release complete message indicates that the first sidelink is successfully released. Correspondingly, the first network device receives the release complete message sent by the first terminal device.

If the second network device determines a link used by the first terminal device to communicate with the second network device after the inter-base station handover, and the second network device determines a target terminal device, the following steps 1107 to 1109 are performed.

1107: The first network device sends a handover request message to the second network device. The handover request message indicates to hand over the first terminal device from the first cell to the second cell. The handover request message may include an identifier of the second cell, a cell radio network temporary identifier of the first terminal device in the first cell, and related information of the third terminal device that is obtained by the first terminal device through measurement. Optionally, the related information of the third terminal device includes the signal strength of the third terminal device. Optionally, the related information of the third terminal device may further include the capability information of the third terminal device. For example, the third terminal device is a terminal device served by the second cell or the second network device. It should be understood that the handover request message is sent to the second network device after the first network device receives the release complete message sent by the first terminal device.

1108: The second network device receives the handover request message sent by the first network device, and performs access control.

1109: The second network device prepares to hand over the first terminal device from the first cell to the second cell, and sends a handover request acknowledgement message to the first network device. The handover request acknowledgement message includes the cell radio network temporary identifier of the first terminal device in the second cell. Optionally, the handover request acknowledgement message further includes an identifier of the target terminal device. The target terminal device is determined by the second network device in the one or more third terminal devices based on the related information of the third terminal device. The target terminal device is configured to provide a function needed for communication between the first terminal device and the second network device. In other words, the target terminal device is configured to forward data of the first terminal device to communicate with the second network device. Correspondingly, the first network device receives the handover request acknowledgement message sent by the second network device.

Optionally, the second network device sends an RRC reconfiguration message to the target terminal device. The RRC reconfiguration message includes information like the identifier of the second cell. Correspondingly, the target terminal device receives the RRC reconfiguration message sent by the second network device, and sends an RRC reconfiguration success message to the second network device.

If the first network device determines a link used by the first terminal device to communicate with the second network device after the inter-base station handover, and the first network device determines a target terminal device, the following steps 1107a to 1109a are performed.

1107a: The first network device sends a handover request message to the second network device. The handover request message indicates to hand over the first terminal device from the first cell to the second cell. The handover request message may include an identifier of the second cell and a cell radio network temporary identifier of the first terminal device in the first cell. Optionally, the handover request message further includes an identifier of the target terminal device. The target terminal device is determined by the first network device in the one or more third terminal devices based on the measurement report information sent by the first terminal device, and the target terminal device is configured to provide a function needed for communication between the first terminal device and the second network device.

1108a: The second network device receives the handover request message sent by the first network device, and performs access control.

1109a: The second network device prepares to hand over the first terminal device from the first cell to the second cell, and sends a handover request acknowledgement message to the first network device. The handover request acknowledgement message includes the cell radio network temporary identifier of the first terminal device in the second cell. Correspondingly, the first network device receives the handover request acknowledgement message sent by the second network device.

1110: The first network device sends first configuration information to the first terminal device. The first configuration information is used by the first terminal device to perform the handover from the first cell to the second cell. The first configuration information includes the identifier of the second cell and the C-RNTI of the first terminal device in the second cell. Optionally, the first configuration information sent by the first network device to the first terminal device further includes the identifier of the target terminal device, and the identifier is used by the first terminal device to establish a second sidelink between the first terminal device and the target terminal device.

It should be understood that, when the first network device or the second network device determines that the first terminal device communicates with the second network device through the relay link or a multi-path link, the first configuration information may include the identifier of the target terminal device. When the first network device or the second network device determines that the first terminal device communicates with the second network device through only a Uu link after the inter-base station handover, the first configuration information sent by the first network device to the first terminal device may not include the identifier of the target terminal device.

1111: The first terminal device receives the first configuration information sent by the first network device, and performs the handover from the first cell to the second cell based on the first configuration information.

For example, if the first configuration information indicates that the first terminal device communicates with the second cell through a direct link/only the Uu link, the first terminal device establishes the direct link between the first terminal device and the second cell based on the first configuration information. In other words, the first terminal device is handed over to the second cell through the direct link.

For example, if the first configuration information indicates that the first terminal device communicates with the second cell through only the relay link, the first terminal device establishes the second sidelink between the first terminal device and the target terminal device based on the first configuration information, and the first terminal device is handed over to the second cell through the relay link.

For example, if the first configuration information indicates that the first terminal device communicates with the second cell through the multi-path link, the first terminal device establishes, based on the first configuration information, the second sidelink between the first terminal device and the target terminal device and the Uu link between the first terminal device and the second network device, and the first terminal device is handed over to the second cell through the multi-path link. The target terminal device communicates with the second cell via a wireless network.

1112: If a data radio bearer (data radio bearer, DRB) is configured with a dual active protocol stack (dual active protocol stack, DAPS), the first network device sends an early status transfer (early status transfer) message to the second network device. The early status transfer message is used by the second network device to clear a data packet that has been sent by the first network device in stored data.

1113: The first network device sends an SN status transfer message to the second network device, to notify a target base station of a PDCP sequence number.

1114: The first terminal device is successfully handed over from the first cell to the second cell, and sends a handover success notification message to the second network device, to notify the second network device that the handover is successfully completed. For example, if the first terminal device communicates with the second network device through only the relay link after the inter-base station handover, the first terminal device forwards the handover success notification message to the second network device via the target terminal device. In other words, the first terminal device sends the handover success notification message to the second network device through the relay link. For example, if the first terminal device communicates with the second network device through only the Uu link after the inter-base station handover, the first terminal device sends the handover success notification message to the second network device through the Uu link. For example, if the first terminal device communicates with the second network device through only the multi-path link after the inter-base station handover, the first terminal device sends the handover success notification message to the second network device through the Uu link or the relay link.

According to the technical solution provided in this embodiment of this application, when the first network device determines to hand over the first terminal device from the first cell to the second cell, the first network device sends the first indication information to the first terminal device. The first terminal device releases the first sidelink between the first terminal device and the second terminal device based on the first indication information. The first network device sends the first configuration information to the first terminal device. The first configuration information is used by the first terminal device to perform the handover from the first cell to the second cell. The first terminal device may be handed over from the first cell to the second cell based on the first configuration information. The first terminal device is a remote UE, and the second terminal device is a relay UE. The first cell is the cell served by the first network device, and the second cell may be the cell served by the first network device or may be the cell served by the second network device. Therefore, in this embodiment of this application, inter-cell/inter-base station handover of the remote UE in a U2N relay scenario can be implemented.

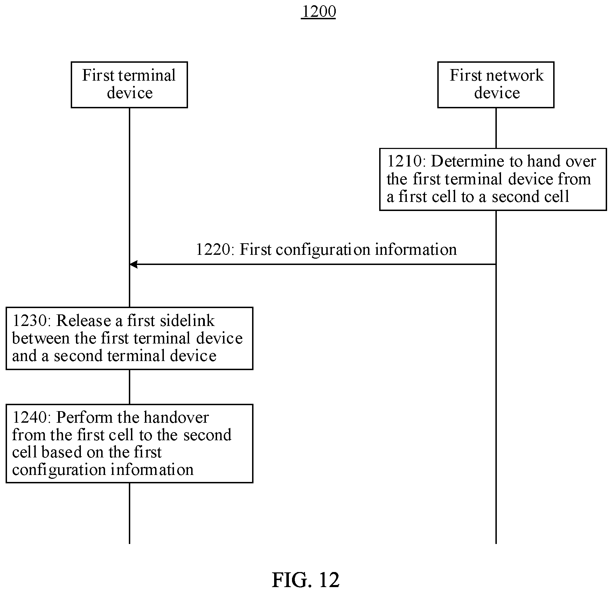

FIG. 12 is a schematic interaction flowchart of a communication method 1200 according to an embodiment of this application. This manner is applicable to a process of handing over a first terminal device from a first cell to a second cell. In this embodiment, when the first terminal device receives the first configuration information used to hand over the first terminal device from the first cell to the second cell, the first terminal device independently determines to release a first sidelink between the first terminal device and a second terminal device.

1210: A first network device determines to hand over the first terminal device from the first cell to the second cell. The first terminal device communicates with the second terminal device through the first sidelink. The second terminal device communicates with the first network device via a wireless network, and the second terminal device is configured to provide a function needed for communication between the first terminal device and the first network device. In other words, the second terminal device is configured to forward data of the first terminal device to communicate with the first network device. The first cell is a cell served by the first network device.

For example, the second cell may be a cell served by the first network device, or the second cell may be a cell served by a second network device. In other words, the first terminal device may perform inter-cell handover or inter-base station handover.

Optionally, the first terminal device sends measurement report information to the first network device. The measurement report information is used by the first network device to determine to hand over the first terminal device from the first cell to the second cell. The measurement report information includes information such as an identifier of the second terminal device, an identifier of the first cell, and signal strength of a third terminal device and/or capability information of the third terminal device and signal strength of the second terminal device that are obtained by the first terminal device through measurement. The capability information of the third terminal device indicates whether the third terminal device supports multi-path. It should be understood that the capability information of the third terminal device includes a release (release) version supported by the third terminal device. For example, a device of an R17 version supports the multi-path, and a device of an R16 version does not support the multi-path and supports only a relay link/an indirect link. The measurement report information may include capability information of one or more third terminal devices. The third terminal device is a terminal device whose signal strength determined by the first terminal device through measurement meets a preset condition. Correspondingly, the first network device receives the measurement report information sent by the first terminal device, and the first network device determines, based on the measurement report information, to hand over the first terminal device from the first cell to the second cell. It may be understood that the measurement report information may include information like the signal strength of the third terminal device. Optionally, the measurement report information may further include the capability information of the third terminal device.

For example, the signal strength obtained by the first terminal device through measurement may be information such as a reference signal received power (reference signal received power, RSRP) of a reference signal/signal to interference noise ratio (signal to interference noise ratio, SINR)/received signal strength indicator (received signal strength indicator, RSSI). This is not limited in this embodiment of this application.

Optionally, before the first terminal device sends the measurement report information to the first network device, the first terminal device receives the capability information of the third terminal device from the third terminal device.

For example, the capability information of the third terminal device may be actively sent by the third terminal device, for example, may be sent by the third terminal device through broadcast.

For example, the capability information of the third terminal device may be obtained by the third terminal device through request. For example, the first terminal device sends a first message to the third terminal device. The first message requests to obtain the capability information of the third terminal device. The third terminal device sends a second message to the first terminal device in response to the first message. The second message includes the capability information of the third terminal device or information used by the first terminal device to determine the capability information of the third terminal device. The first terminal device receives the second message sent by the third terminal device. The first message may be specifically a sidelink discovery request (sidelink discovery request) message, and the second message may be specifically a sidelink discovery response (sidelink discovery response) message.

1220: The first network device sends the first configuration information to the first terminal device. The first configuration information is used by the first terminal device to perform the handover from the first cell to the second cell. The first configuration information includes an identifier of the second cell and a C-RNTI of the first terminal device in the second cell.

When the second cell is the cell served by the second network device, in other words, when the first terminal device performs the inter-base station handover, in an implementation, before the first network device sends the first configuration information to the first terminal device, the first network device sends a handover request message to the second network device. The handover request message indicates to hand over the first terminal device from the first cell to the second cell. The handover request message may include the identifier of the second cell, the cell radio network temporary identifier of the first terminal device in the first cell, and related information of the third terminal device that is obtained by the first terminal device through measurement. The related information of the third terminal device includes the signal strength of the third terminal device. For example, the third terminal device is a terminal device served by the second cell. In this implementation, the second network device determines a link used by the first terminal device to communicate with the second network device after the inter-base station handover. If the second network device determines that the first terminal device communicates with the second network device through a relay link or a multi-path link, the second network device further needs to determine a target terminal device that is configured to provide a function needed for communication between the first terminal device and the second network device.

Optionally, the related information of the third terminal device may further include the capability information of the third terminal device. If the second network device determines that the first terminal device communicates with the second network device through the multi-path link, the target terminal device determined by the second network device needs to be a terminal device that supports the multi-path link. If the second network device determines that the first terminal device communicates with the second network device through the relay link, the target terminal device determined by the second network device needs to be a terminal device that supports the relay link. Therefore, the handover request message sent by the first network device to the second network device includes the capability information of the third terminal device, so that a case in which the target terminal device determined by the second network device is not applicable can be avoided.

Correspondingly, the second network device receives the handover request message sent by the first network device.

The second network device sends a handover request acknowledgement message to the first network device. The handover request acknowledgement message includes the cell radio network temporary identifier of the first terminal device in the second cell. Optionally, the handover request acknowledgement message sent by the second network device to the first network device further includes an identifier of the target terminal device. The target terminal device is determined by the second network device in the one or more third terminal devices based on the related information of the third terminal device. The target terminal device is configured to provide a function needed for communication between the first terminal device and the second network device. In other words, the target terminal device is configured to forward data of the first terminal device to communicate with the second network device.

Correspondingly, the first network device receives the handover request acknowledgement message sent by the second network device, and sends the first configuration information to the first terminal device. Optionally, the first configuration information sent by the first network device to the first terminal device further includes an identifier of the target terminal device, and the identifier is used by the first terminal device to establish a second sidelink between the first terminal device and the target terminal device.

It should be understood that, when the second network device determines that the first terminal device communicates with the second network device through only a Uu link after the inter-base station handover, the handover request acknowledgement message may not include the identifier of the target terminal device, and the first configuration information sent by the first network device to the first terminal device may either not include the identifier of the target terminal device. When the second network device determines that the first terminal device communicates with the second network device through the relay link or the multi-path link, the handover request acknowledgement message may include the identifier of the target terminal device, and the first configuration information sent by the first network device to the first terminal device may include the identifier of the target terminal device.

When the first terminal device performs the inter-base station handover, in another implementation, before the first network device sends the first configuration information to the first terminal device, the first network device sends a handover request message to the second network device. The handover request message indicates to hand over the first terminal device from the first cell to the second cell. The handover request message may include the identifier of the second cell and the cell radio network temporary identifier of the first terminal device in the first cell. Optionally, the handover request message further includes an identifier of a target terminal device. The target terminal device is determined by the first network device in one or more third terminal devices based on the measurement report information sent by the first terminal device, and the target terminal device is configured to provide a function needed for communication between the first terminal device and the second network device. In this implementation, the first network device determines a link used by the first terminal device to communicate with the second network device after the inter-base station handover. If the first network device determines that the first terminal device communicates with the second network device through a relay link or a multi-path link, the first network device further needs to determine a target terminal device that is configured to provide a function needed for communication between the first terminal device and the second network device.

Correspondingly, the second network device receives the handover request message sent by the first network device.

The second network device sends a handover request acknowledgement message to the first network device. The handover request acknowledgement message includes the cell radio network temporary identifier of the first terminal device in the second cell.

Correspondingly, the first network device receives the handover request acknowledgement message sent by the second network device, and sends the first configuration information to the first terminal device. Optionally, the first configuration information sent by the first network device to the first terminal device further includes the identifier of the target terminal device, and the identifier is used by the first terminal device to establish a second sidelink between the first terminal device and the target terminal device.

It should be understood that, when the first network device determines that the first terminal device communicates with the second network device through only a Uu link after the inter-base station handover, the handover request message may not include the identifier of the target terminal device, and the first configuration information sent by the first network device to the first terminal device may either not include the identifier of the target terminal device. When the first network device determines that the first terminal device communicates with the second network device through the relay link or the multi-path link, the handover request message may include the identifier of the target terminal device, and the first configuration information sent by the first network device to the first terminal device may include the identifier of the target terminal device.

Optionally, when the first network device determines that capability information of the second network device is not obtained or the capability information of the second network device does not match capability information of the first network device, the handover request message sent by the first network device to the second network device does not include sidelink configuration information of the first terminal device. The capability information of the second network device indicates whether the second network device supports the multi-path. It should be understood that, when the first network device determines that the second network device supports the multi-path, the handover request message sent by the first network device to the second network device may not include the sidelink configuration information of the first terminal device. For example, when the first network device determines that the capability information of the second network device is not obtained or the capability information of the second network device does not match the capability information of the first network device, the first network device deletes the sidelink configuration information of the first terminal device and then sends the handover request message to the second network device. The sent handover request message does not include the sidelink configuration information of the first terminal device.

The first network device obtains the capability information of the second network device in a plurality of manners. For example, the first network device may directly exchange the respective capability information with the second network device. For another example, the measurement report information sent by the first terminal device includes capability information of different cells, so that the first network device can obtain the capability information of the second network device. Specifically, the capability information of the different cells may be obtained by the first terminal device through a SIB1 message broadcast by a system.

When the first terminal device performs the inter-base station handover, and the first network device determines that the capability information of the second network device is not obtained or the capability information of the second network device does not match the capability information of the first network device, the handover request message sent by the first network device to the second network device does not include the sidelink configuration information of the first terminal device. This can prevent the handover request message from carrying the sidelink configuration information of the first terminal device that cannot be understood by the second network device, and prevent fullConfig handover from being triggered.

Optionally, the second network device sends an RRC reconfiguration message to the target terminal device. The RRC reconfiguration message includes information like the identifier of the second cell. Correspondingly, the target terminal device receives the RRC reconfiguration message sent by the second network device, and sends an RRC reconfiguration success message to the second network device.

When the second cell is the cell served by the first network device, in other words, when the first terminal device does not perform the inter-base station handover, the first network device determines a link used by the first terminal device to communicate with the second cell after the inter-cell handover. Optionally, the first network device sends first configuration information to the first terminal device. The first configuration information includes an identifier of the second cell and a C-RNTI of the first terminal device in the second cell. Optionally, the first configuration information sent by the first network device to the first terminal device further includes an identifier of a target terminal device, and the identifier is used by the first terminal device to establish a second sidelink between the first terminal device and the target terminal device.

When the first network device determines that the first terminal device communicates with the second cell through the relay link or a multi-path link, the first network device further needs to determine a target terminal device that is configured to provide a function needed for communication between the first terminal device and the second cell. Specifically, the first network device determines the target terminal device in the one or more third terminal devices based on the measurement report information sent by the first terminal device, and the target terminal device is configured to provide a function needed for communication between the first terminal device and the second network device. If the first network device determines that the first terminal device communicates with the second cell through the multi-path link, the target terminal device determined by the first network device needs to be a terminal device that supports the multi-path link. If the first network device determines that the first terminal device communicates with the second cell through the relay link, the target terminal device determined by the first network device needs to be a terminal device that supports the relay link. In other words, when the first network device determines that the first terminal device communicates with the second cell through the relay link or the multi-path link, the first configuration information includes the identifier of the target terminal device. When the first network device determines that the first terminal device communicates with the second cell through the Uu link, the first configuration information does not include the identifier of the target terminal device.

1230: The first terminal device receives the first configuration information sent by the first network device. When the first terminal device receives the first configuration information sent by the first network device, the first terminal device releases the first sidelink between the first terminal device and the second terminal device. In other words, when the first terminal device determines, based on the first configuration information, to perform the handover from the first cell to the second cell, the first terminal device releases the first sidelink between the first terminal device and the second terminal device.

For example, when the first terminal device determines, based on the identifier of the second cell in the first configuration information, that the second cell is the cell served by the second network device, in other words, when the first terminal device determines, based on the first configuration information, to perform the inter-base station handover, the first terminal device releases the first sidelink between the first terminal device and the second terminal device.

Specifically, the first terminal device may determine, based on a difference between new radio cell identifies (NR cell identities, NCIs) of the first network device and the second network device, that the second cell is the cell served by the second network device. In other words, the first terminal device may determine, based on the difference between the NCIs of the first network device and the second network device, that the inter-base station handover needs to be performed. For example, one piece of information indicating a length of a network device ID may be added to the SIB1, so that the first terminal device can determine, based on the information, that the second cell is the cell served by the second network device. For another example, a length of a network device ID may be pre-configured in a SIM card, so that the first terminal device may determine, based on information pre-configured in the SIM card, that the second cell is the cell served by the second network device. NCI=cell ID+network device ID, and a total length is 36 bits. The length of the network device ID ranges from 22 bits to 32 bits, which can be dynamically configured.

1240: The first terminal device performs the handover from the first cell to the second cell based on the first configuration information.

Optionally, the first configuration information includes the identifier of the second cell and the C-RNTI of the first terminal device in the second cell, and the first configuration information indicates that the first terminal device communicates with the second cell through the direct link/only the Uu link. The first terminal device establishes a direct link between the first terminal device and the second cell based on the first configuration information. In other words, the first terminal device is handed over to the second cell through the direct link.

Optionally, the first configuration information includes the identifier of the second cell, the C-RNTI of the first terminal device in the second cell, and the identifier of the target terminal device. If the first configuration information indicates that the first terminal device communicates with the second cell through only the relay link, the first terminal device establishes the second sidelink between the first terminal device and the target terminal device based on the first configuration information, and the first terminal device is handed over to the second cell through the relay link. If the first configuration information indicates that the first terminal device communicates with the second cell through the multi-path link, the first terminal device establishes, based on the first configuration information, the second sidelink between the first terminal device and the target terminal device and the Uu link used for communication between the first terminal device and the second cell, and the first terminal device is handed over to the second cell through the multi-path link. For example, when the first terminal device performs the inter-base station handover, if the first configuration information indicates that the first terminal device communicates with the second cell through the multi-path link, the first terminal device establishes, based on the first configuration information, the second sidelink between the first terminal device and the target terminal device and a Uu link between the first terminal device and the second network device. The target terminal device communicates with the second cell via a wireless network.

Optionally, if the first terminal device is successfully handed over from the first cell to the second cell, the first terminal device sends a handover success notification message to a network device serving the second cell. For example, when the second cell is the cell served by the first network device, if the first terminal device is successfully handed over from the first cell to the second cell, the first terminal device sends the handover success notification message to the first network device. For example, when the second cell is the cell served by the second network device, if the first terminal device is successfully handed over from the first cell to the second cell, the first terminal device sends the handover success notification message to the second network device.

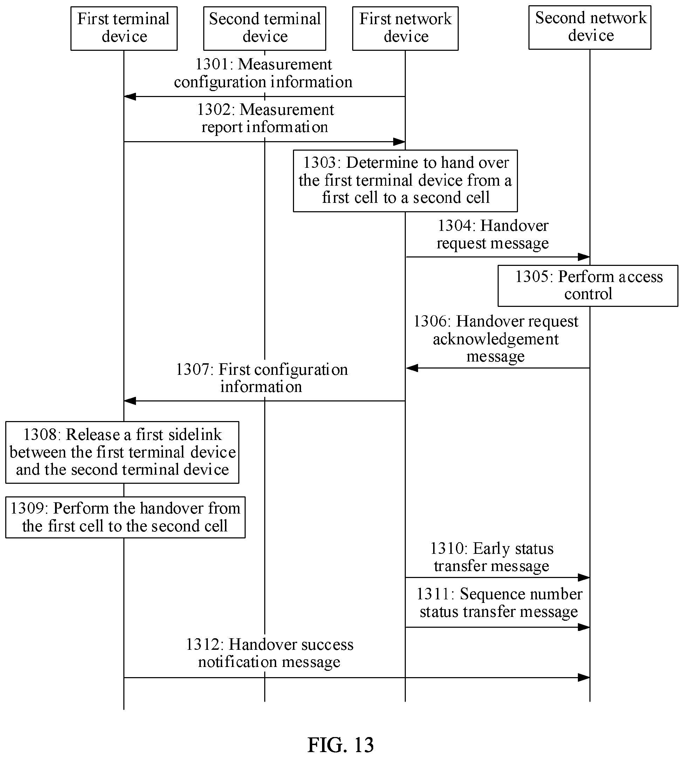

A case in which a first terminal device is handed over between base stations is used as an example below to specifically describe a process of handing over the first terminal device from a first cell to a second cell in the method embodiment in FIG. 12. FIG. 13 is a schematic interaction flowchart of an example of a communication method according to an embodiment of this application.

1301: A first network device configures measurement configuration information of a first terminal device based on information such as roaming and access restriction, and sends the measurement configuration information to a first terminal device. The measurement configuration information is used by the first terminal device to generate measurement report information and report the measurement report information to the first network device.

1302: The first terminal device generates the measurement report information based on the measurement configuration information. When a reporting condition is met, the first terminal device sends the measurement report information to the first network device. The measurement report information is used by the first network device to determine to hand over the first terminal device from a first cell to a second cell.

The measurement report information includes information such as an identifier of a second terminal device, an identifier of the first cell, and signal strength of a third terminal device and/or capability information of the third terminal device and signal strength of the second terminal device that are obtained by the first terminal device through measurement. The capability information of the third terminal device may indicate whether the third terminal device supports multi-path. The first terminal device communicates with the second terminal device through a first sidelink. The second terminal device communicates with the first network device via a wireless network, and the second terminal device is configured to provide a function needed for communication between the first terminal device and the first network device. In other words, the second terminal device is configured to forward data of the first terminal device to communicate with the first network device. The first cell is a cell served by the first network device. It should be understood that the capability information of the third terminal device includes a release (release) version supported by the third terminal device. For example, a device of an R17 version supports the multi-path, and a device of an R16 version does not support the multi-path and supports only a relay link/an indirect link. The measurement report information may include capability information of one or more third terminal devices. The third terminal device is a terminal device whose signal strength determined by the first terminal device through measurement meets a preset condition. It may be understood that the measurement report information may include information like the signal strength of the third terminal device. Optionally, the measurement report information may further include the capability information of the third terminal device.

1303: The first network device receives the measurement report information sent by the first terminal device, and the first network device determines, based on the measurement report information, to hand over the first terminal device from the first cell to the second cell. Specifically, the first network device may determine, based on the measurement report information and RRM information, to hand over the first terminal device from the first cell to the second cell. The second cell is a cell served by a second network device.

If the second network device determines a link used by the first terminal device to communicate with the second network device after the inter-base station handover, and the second network device determines a target terminal device, the following steps 1304 to 1306 are performed.

1304: The first network device sends a handover request message to the second network device. The handover request message indicates to hand over the first terminal device from the first cell to the second cell. The handover request message may include an identifier of the second cell, a cell radio network temporary identifier of the first terminal device in the first cell, and related information of the third terminal device that is obtained by the first terminal device through measurement. Optionally, the related information of the third terminal device includes the signal strength of the third terminal device. Optionally, the related information of the third terminal device may further include the capability information of the third terminal device. For example, the third terminal device is a terminal device served by the second cell.

Optionally, when the first network device determines that capability information of the second network device is not obtained or the capability information of the second network device does not match capability information of the first network device, the handover request message sent by the first network device to the second network device does not include sidelink configuration information of the first terminal device. The capability information of the first network device indicates whether the first network device supports the multi-path, and the capability information of the second network device indicates whether the second network device supports the multi-path.

The first network device obtains the capability information of the second network device in a plurality of manners. For example, the first network device may directly exchange the respective capability information with the second network device. For another example, the measurement report information sent by the first terminal device includes capability information of different cells, so that the first network device can obtain the capability information of the second network device. Specifically, the capability information of the different cells may be obtained by the first terminal device through a SIB1 message broadcast by a system.

When the first terminal device performs the inter-base station handover, and the first network device determines that the capability information of the second network device is not obtained or the capability information of the second network device does not match the capability information of the first network device, the handover request message sent by the first network device to the second network device does not include the sidelink configuration information of the first terminal device. This can prevent the handover request message from carrying the sidelink configuration information of the first terminal device that cannot be understood by the second network device, and prevent fullConfig handover from being triggered.

1305: The second network device receives the handover request message sent by the first network device, and performs access control.

1306: The second network device prepares to hand over the first terminal device from the first cell to the second cell, and sends a handover request acknowledgement message to the first network device. The handover request acknowledgement message includes the cell radio network temporary identifier of the first terminal device in the second cell. Optionally, the handover request acknowledgement message further includes an identifier of the target terminal device. The target terminal device is determined by the second network device in the one or more third terminal devices based on the related information of the third terminal device. The target terminal device is configured to provide a function needed for communication between the first terminal device and the second network device. In other words, the target terminal device is configured to forward data of the first terminal device to communicate with the second network device. Correspondingly, the first network device receives the handover request acknowledgement message sent by the second network device.

Optionally, the second network device sends an RRC reconfiguration message to the target terminal device. The RRC reconfiguration message includes information like the identifier of the second cell. Correspondingly, the target terminal device receives the RRC reconfiguration message sent by the second network device, and sends an RRC reconfiguration success message to the second network device.

If the first network device determines a link used by the first terminal device to communicate with the second network device after the inter-base station handover, and the first network device determines a target terminal device, the following steps 1304a to 1306a are performed.

1304a: The first network device sends a handover request message to the second network device. The handover request message indicates to hand over the first terminal device from the first cell to the second cell. The handover request message may include an identifier of the second cell and a cell radio network temporary identifier of the first terminal device in the first cell. Optionally, the handover request message further includes an identifier of the target terminal device. The target terminal device is determined by the first network device in one or more third terminal devices based on the measurement report information sent by the first terminal device, and the target terminal device is configured to provide a function needed for communication between the first terminal device and the second network device.

Optionally, when the first network device determines that capability information of the second network device is not obtained or the capability information of the second network device does not match capability information of the first network device, the handover request message sent by the first network device to the second network device does not include sidelink configuration information of the first terminal device. The capability information of the second network device indicates whether the second network device supports the multi-path.

The first network device obtains the capability information of the second network device in a plurality of manners. For example, the first network device may directly exchange the respective capability information with the second network device. For another example, the measurement report information sent by the first terminal device includes capability information of different cells, so that the first network device can obtain the capability information of the second network device. Specifically, the capability information of the different cells may be obtained by the first terminal device through a SIB1 message broadcast by a system.

When the first terminal device performs the inter-base station handover, and the first network device determines that the capability information of the second network device is not obtained or the capability information of the second network device does not match the capability information of the first network device, the handover request message sent by the first network device to the second network device does not include the sidelink configuration information of the first terminal device. This can prevent the handover request message from carrying the sidelink configuration information of the first terminal device that cannot be understood by the second network device, and prevent fullConfig handover from being triggered.

1305a: The second network device receives the handover request message sent by the first network device, and performs access control.

1306a: The second network device prepares to hand over the first terminal device from the first cell to the second cell, and sends a handover request acknowledgement message to the first network device. The handover request acknowledgement message includes the cell radio network temporary identifier of the first terminal device in the second cell. Correspondingly, the first network device receives the handover request acknowledgement message sent by the second network device.

1307: The first network device sends first configuration information to the first terminal device. The first configuration information is used by the first terminal device to perform the handover from the first cell to the second cell. The first configuration information includes the identifier of the second cell and the C-RNTI of the first terminal device in the second cell. Optionally, the first configuration information sent by the first network device to the first terminal device further includes the identifier of the target terminal device, and the identifier is used by the first terminal device to establish a second sidelink between the first terminal device and the target terminal device.

It should be understood that, when the first network device or the second network device determines that the first terminal device communicates with the second network device through the relay link or a multi-path link, the first configuration information may include the identifier of the target terminal device. When the first network device or the second network device determines that the first terminal device communicates with the second network device through only a Uu link after the inter-base station handover, the first configuration information sent by the first network device to the first terminal device may not include the identifier of the target terminal device.

1308: When the first terminal device receives the first configuration information sent by the first network device, the first terminal device releases the first sidelink between the first terminal device and the second terminal device. In other words, when the first terminal device determines, based on the first configuration information, to perform the handover from the first cell to the second cell, the first terminal device releases the first sidelink between the first terminal device and the second terminal device.

For example, when the first terminal device determines, based on the identifier of the second cell in the first configuration information, that the second cell is the cell served by the second network device, in other words, when the first terminal device determines, based on the first configuration information, to perform the inter-base station handover, the first terminal device releases the first sidelink between the first terminal device and the second terminal device.

1309: The first terminal device performs the handover from the first cell to the second cell based on the first configuration information.

For example, if the first configuration information indicates that the first terminal device communicates with the second cell through a direct link/only the Uu link, the first terminal device establishes the direct link between the first terminal device and the second cell based on the first configuration information. In other words, the first terminal device is handed over to the second cell through the direct link.

For example, if the first configuration information indicates that the first terminal device communicates with the second cell through only the relay link, the first terminal device establishes the second sidelink between the first terminal device and the target terminal device based on the first configuration information, and the first terminal device is handed over to the second cell through the relay link.

For example, if the first configuration information indicates that the first terminal device communicates with the second cell through the multi-path link, the first terminal device establishes, based on the first configuration information, the second sidelink between the first terminal device and the target terminal device and the Uu link between the first terminal device and the second network device, and the first terminal device is handed over to the second cell through the multi-path link. The target terminal device communicates with the second cell via a wireless network.

1310: If a DRB is configured with a DAPS, the first network device sends an early status transfer message to the second network device. The early status transfer message is used by the second network device to clear a data packet that has been sent by the first network device in stored data.

1311: The first network device sends an SN status transfer message to the second network device, to notify a target base station of a PDCP sequence number.

1312: The first terminal device is successfully handed over from the first cell to the second cell, and sends a handover success notification message to the second network device, to notify the second network device that the handover is successfully completed. For example, if the first terminal device communicates with the second network device through only the relay link after the inter-base station handover, the first terminal device forwards the handover success notification message to the second network device via the target terminal device. In other words, the first terminal device sends the handover success notification message to the second network device through the relay link. For example, if the first terminal device communicates with the second network device through only the Uu link after the inter-base station handover, the first terminal device sends the handover success notification message to the second network device through the Uu link. For example, if the first terminal device communicates with the second network device through only the multi-path link after the inter-base station handover, the first terminal device sends the handover success notification message to the second network device through the Uu link or the relay link.

According to the technical solution provided in this embodiment of this application, when the first network device determines to hand over the first terminal device from the first cell to the second cell, the first network device sends the first configuration information to the first terminal device. The first configuration information is used by the first terminal device to perform the handover from the first cell to the second cell. When the first terminal device receives the first configuration information, the first terminal device releases the first sidelink between the first terminal device and the second terminal device. The first terminal device performs the handover from the first cell to the second cell based on the first configuration information. The first terminal device is a remote UE, and the second terminal device is a relay UE. The first cell is the cell served by the first network device, and the second cell may be the cell served by the first network device or may be the cell served by the second network device. Therefore, in this embodiment of this application, inter-cell/inter-base station handover of the remote UE in a U2N relay scenario can be implemented.

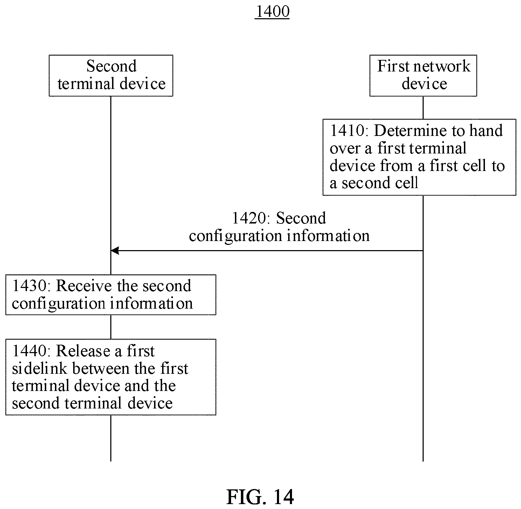

FIG. 14 is a schematic interaction flowchart of a communication method 1400 according to an embodiment of this application. This manner is applicable to a process of handing over a first terminal device from a first cell to a second cell. In this embodiment, when a first network device determines to hand over the first terminal device from the first cell to the second cell, the first network device sends second configuration information to a second terminal device, and the second terminal device releases a first sidelink between the first terminal device and the second terminal device based on the second configuration information.

1410: The first network device determines to hand over the first terminal device from the first cell to the second cell. The second terminal device communicates with the first network device via a wireless network. The second terminal device communicates with the first terminal device through the first sidelink. The second terminal device is configured to provide a function needed for communication between the first terminal device and the first network device. In other words, the second terminal device is configured to forward data of the first terminal device to communicate with the first network device. The first cell is a cell served by the first network device.

For example, the second cell may be a cell served by the first network device, or the second cell may be a cell served by a second network device. In other words, the first terminal device may perform inter-cell handover or inter-base station handover.

Optionally, the first terminal device sends measurement report information to the first network device. The measurement report information is used by the first network device to determine to hand over the first terminal device from the first cell to the second cell. The measurement report information includes information such as an identifier of the second terminal device, an identifier of the first cell, and signal strength of a third terminal device and/or capability information of the third terminal device and signal strength of the second terminal device that are obtained by the first terminal device through measurement. The capability information of the third terminal device indicates whether the third terminal device supports multi-path. It should be understood that the capability information of the third terminal device includes a release (release) version supported by the third terminal device. For example, a device of an R17 version supports the multi-path, and a device of an R16 version does not support the multi-path and supports only a relay link/an indirect link. The measurement report information may include capability information of one or more third terminal devices. The third terminal device is a terminal device whose signal strength determined by the first terminal device through measurement meets a preset condition. Correspondingly, the first network device receives the measurement report information sent by the first terminal device, and the first network device determines, based on the measurement report information, to hand over the first terminal device from the first cell to the second cell. It may be understood that the measurement report information may include information like the signal strength of the third terminal device. Optionally, the measurement report information may further include the capability information of the third terminal device.

For example, the signal strength obtained by the first terminal device through measurement may be information such as a reference signal received power (reference signal received power, RSRP) of a reference signal/signal to interference noise ratio (signal to interference noise ratio, SINR)/received signal strength indicator (received signal strength indicator, RSSI). This is not limited in this embodiment of this application.

Optionally, before the first terminal device sends the measurement report information to the first network device, the first terminal device receives the capability information of the third terminal device from the third terminal device.

For example, the capability information of the third terminal device may be actively sent by the third terminal device, for example, may be sent by the third terminal device through broadcast.

For example, the capability information of the third terminal device may be obtained by the third terminal device through request. For example, the first terminal device sends a first message to the third terminal device. The first message requests to obtain the capability information of the third terminal device. The third terminal device sends a second message to the first terminal device in response to the first message. The second message includes the capability information of the third terminal device or information used by the first terminal device to determine the capability information of the third terminal device. The first terminal device receives the second message sent by the third terminal device. The first message may be specifically a sidelink discovery request message, and the second message may be specifically a sidelink discovery response message.

1420: The first network device sends the second configuration information to the second terminal device. The second configuration information does not include a related configuration of the second terminal device serving as a relay of the first terminal device, and the second configuration information is a related configuration of a relay reconfigured by the first network device for the second terminal device.

1430: The second terminal device receives the second configuration information sent by the first network device.

1440: The second terminal device releases the first sidelink between the second terminal device and the first terminal device based on the second configuration information. Specifically, because the second configuration information does not include the related configuration of the second terminal device serving as the relay of the first terminal device, in other words, the related configuration of the second terminal device serving as the relay of the first terminal device has been deleted, the second terminal device releases the first sidelink between the second terminal device and the first terminal device.

When the first terminal device performs the inter-base station handover, in an implementation, the first network device sends a handover request message to the second network device. The handover request message indicates to hand over the first terminal device from the first cell to the second cell. The handover request message may include an identifier of the second cell, a cell radio network temporary identifier of the first terminal device in the first cell, and related information of the third terminal device that is obtained by the first terminal device through measurement. The related information of the third terminal device includes the signal strength of the third terminal device. For example, the third terminal device is a terminal device served by the second cell. In this implementation, the second network device determines a link used by the first terminal device to communicate with the second network device after the inter-base station handover. If the second network device determines that the first terminal device communicates with the second network device through a relay link or a multi-path link, the second network device further needs to determine a target terminal device that is configured to provide a function needed for communication between the first terminal device and the second network device.

Optionally, the related information of the third terminal device may further include the capability information of the third terminal device. If the second network device determines that the first terminal device communicates with the second network device through the multi-path link, the target terminal device determined by the second network device needs to be a terminal device that supports the multi-path link. If the second network device determines that the first terminal device communicates with the second network device through the relay link, the target terminal device determined by the second network device needs to be a terminal device that supports the relay link. Therefore, the handover request message sent by the first network device to the second network device includes the capability information of the third terminal device, so that a case in which the target terminal device determined by the second network device is not applicable can be avoided.

Correspondingly, the second network device receives the handover request message sent by the first network device.

The second network device sends a handover request acknowledgement message to the first network device. The handover request acknowledgement message includes the cell radio network temporary identifier of the first terminal device in the second cell. Optionally, the handover request acknowledgement message sent by the second network device to the first network device further includes an identifier of the target terminal device. The target terminal device is determined by the second network device in the one or more third terminal devices based on the related information of the third terminal device. The target terminal device is configured to provide a function needed for communication between the first terminal device and the second network device. In other words, the target terminal device is configured to forward data of the first terminal device to communicate with the second network device.

Correspondingly, the first network device receives the handover request acknowledgement message sent by the second network device.

The first network device sends first configuration information to the first terminal device. The first configuration information includes the identifier of the second cell and the C-RNTI of the first terminal device in the second cell. Optionally, the first configuration information sent by the first network device to the first terminal device further includes an identifier of the target terminal device, and the identifier is used by the first terminal device to establish a second sidelink between the first terminal device and the target terminal device. Correspondingly, the first terminal device receives the first configuration information sent by the first network device.

It should be understood that, when the second network device determines that the first terminal device communicates with the second network device through only a Uu link after the inter-base station handover, the handover request acknowledgement message may not include the identifier of the target terminal device, and the first configuration information sent by the first network device to the first terminal device may either not include the identifier of the target terminal device. When the second network device determines that the first terminal device communicates with the second network device through the relay link or the multi-path link, the handover request acknowledgement message may include the identifier of the target terminal device, and the first configuration information sent by the first network device to the first terminal device may include the identifier of the target terminal device.

When the first terminal device performs the inter-base station handover, in another implementation, the first network device sends a handover request message to the second network device. The handover request message indicates to hand over the first terminal device from the first cell to the second cell. The handover request message may include an identifier of the second cell and a cell radio network temporary identifier of the first terminal device in the first cell. Optionally, the handover request message further includes an identifier of a target terminal device. The target terminal device is determined by the first network device in the one or more third terminal devices based on the measurement report information sent by the first terminal device, and the target terminal device is configured to provide a function needed for communication between the first terminal device and the second network device. In this implementation, the first network device determines a link used by the first terminal device to communicate with the second network device after the inter-base station handover. If the first network device determines that the first terminal device communicates with the second network device through a relay link or a multi-path link, the first network device further needs to determine a target terminal device that is configured to provide a function needed for communication between the first terminal device and the second network device.

Correspondingly, the second network device receives the handover request message sent by the first network device.

The second network device sends a handover request acknowledgement message to the first network device. The handover request acknowledgement message includes the C-RNTI of the first terminal device in the second cell.

Correspondingly, the first network device receives the handover request acknowledgement message sent by the second network device.

The first network device sends first configuration information to the first terminal device. The first configuration information includes the identifier of the second cell and the C-RNTI of the first terminal device in the second cell. Optionally, the first configuration information sent by the first network device to the first terminal device further includes the identifier of the target terminal device, and the identifier is used by the first terminal device to establish a second sidelink between the first terminal device and the target terminal device. Correspondingly, the first terminal device receives the first configuration information sent by the first network device.

It should be understood that, when the first network device determines that the first terminal device communicates with the second network device through only a Uu link after the inter-base station handover, the handover request message may not include the identifier of the target terminal device, and the first configuration information sent by the first network device to the first terminal device may either not include the identifier of the target terminal device. When the first network device determines that the first terminal device communicates with the second network device through the relay link or the multi-path link, the handover request message may include the identifier of the target terminal device, and the first configuration information sent by the first network device to the first terminal device may include the identifier of the target terminal device.

Optionally, when the first network device determines that capability information of the second network device is not obtained or the capability information of the second network device does not match capability information of the first network device, the handover request message sent by the first network device to the second network device does not include sidelink configuration information of the first terminal device. The capability information of the first network device indicates whether the first network device supports the multi-path, and the capability information of the second network device indicates whether the second network device supports the multi-path. It should be understood that, when the first network device determines that the second network device supports the multi-path, the handover request message sent by the first network device to the second network device may not include the sidelink configuration information of the first terminal device. For example, when the first network device determines that the capability information of the second network device is not obtained or the capability information of the second network device does not match the capability information of the first network device, the first network device deletes the sidelink configuration information of the first terminal device and then sends the handover request message to the second network device. The sent handover request message does not include the sidelink configuration information of the first terminal device.

The first network device obtains the capability information of the second network device in a plurality of manners. For example, the first network device may directly exchange the respective capability information with the second network device. For another example, the measurement report information sent by the first terminal device includes capability information of different cells, so that the first network device can obtain the capability information of the second network device. Specifically, the capability information of the different cells may be obtained by the first terminal device through a SIB1 message broadcast by a system.

When the first terminal device performs the inter-base station handover, and the first network device determines that the capability information of the second network device is not obtained or the capability information of the second network device does not match the capability information of the first network device, the handover request message sent by the first network device to the second network device does not include the sidelink configuration information of the first terminal device. This can prevent the handover request message from carrying the sidelink configuration information of the first terminal device that cannot be understood by the second network device, and prevent fullConfig handover from being triggered.

Optionally, the second network device sends an RRC reconfiguration message to the target terminal device. The RRC reconfiguration message includes information like the identifier of the second cell. Correspondingly, the target terminal device receives the RRC reconfiguration message sent by the second network device, and sends an RRC reconfiguration success message to the second network device.

When the second cell is the cell served by the first network device, in other words, when the first terminal device does not perform the inter-base station handover, the first network device determines a link used by the first terminal device to communicate with the second cell after the inter-cell handover. Optionally, the first network device sends first configuration information to the first terminal device. The first configuration information includes an identifier of the second cell and a C-RNTI of the first terminal device in the second cell. Optionally, the first configuration information sent by the first network device to the first terminal device further includes an identifier of a target terminal device, and the identifier is used by the first terminal device to establish a second sidelink between the first terminal device and the target terminal device. Correspondingly, the first terminal device receives the first configuration information sent by the first network device.

When the first network device determines that the first terminal device communicates with the second cell through the relay link or a multi-path link, the first network device further needs to determine a target terminal device that is configured to provide a function needed for communication between the first terminal device and the second cell. Specifically, the first network device determines the target terminal device in the one or more third terminal devices based on the measurement report information sent by the first terminal device, and the target terminal device is configured to provide a function needed for communication between the first terminal device and the second network device. If the first network device determines that the first terminal device communicates with the second cell through the multi-path link, the target terminal device determined by the first network device needs to be a terminal device that supports the multi-path link. If the first network device determines that the first terminal device communicates with the second cell through the relay link, the target terminal device determined by the first network device needs to be a terminal device that supports the relay link. In other words, when the first network device determines that the first terminal device communicates with the second cell through the relay link or the multi-path link, the first configuration information includes the identifier of the target terminal device. When the first network device determines that the first terminal device communicates with the second cell through the Uu link, the first configuration information does not include the identifier of the target terminal device.

Optionally, the first terminal device performs the handover from the first cell to the second cell based on the first configuration information.

Optionally, the first configuration information includes the identifier of the second cell and the C-RNTI of the first terminal device in the second cell, and the first configuration information indicates that the first terminal device communicates with the second cell through the direct link/only the Uu link. The first terminal device establishes a direct link between the first terminal device and the second cell based on the first configuration information. In other words, the first terminal device is handed over to the second cell through the direct link.

Optionally, the first configuration information includes the identifier of the second cell, the C-RNTI of the first terminal device in the second cell, and the identifier of the target terminal device. If the first configuration information indicates that the first terminal device communicates with the second cell through only the relay link, the first terminal device establishes the second sidelink between the first terminal device and the target terminal device based on the first configuration information, and the first terminal device is handed over to the second cell through the relay link. If the first configuration information indicates that the first terminal device communicates with the second cell through the multi-path link, the first terminal device establishes, based on the first configuration information, the second sidelink between the first terminal device and the target terminal device and the Uu link used for communication between the first terminal device and the second cell, and the first terminal device is handed over to the second cell through the multi-path link. For example, when the first terminal device performs the inter-base station handover, if the first configuration information indicates that the first terminal device communicates with the second cell through the multi-path link, the first terminal device establishes, based on the first configuration information, the second sidelink between the first terminal device and the target terminal device and a Uu link between the first terminal device and the second network device. The target terminal device communicates with the second cell via a wireless network.

Optionally, if the first terminal device is successfully handed over from the first cell to the second cell, the first terminal device sends a handover success notification message to a network device serving the second cell. For example, when the second cell is the cell served by the first network device, if the first terminal device is successfully handed over from the first cell to the second cell, the first terminal device sends the handover success notification message to the first network device. For example, when the second cell is the cell served by the second network device, if the first terminal device is successfully handed over from the first cell to the second cell, the first terminal device sends the handover success notification message to the second network device.

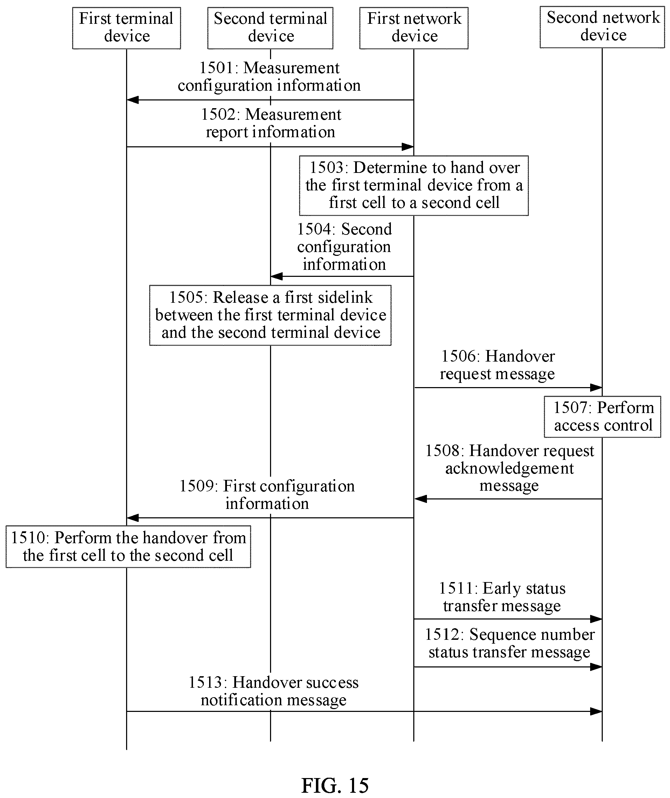

A case in which a first terminal device is handed over between base stations is used as an example below to specifically describe a process of handing over the first terminal device from a first cell to a second cell in the method embodiment in FIG. 14. FIG. 15 is a schematic interaction flowchart of an example of a communication method according to an embodiment of this application.

1501: A first network device configures measurement configuration information of a first terminal device based on information such as roaming and access restriction, and sends the measurement configuration information to a first terminal device. The measurement configuration information is used by the first terminal device to generate measurement report information and report the measurement report information to the first network device.

1502: The first terminal device generates the measurement report information based on the measurement configuration information. When a reporting condition is met, the first terminal device sends the measurement report information to the first network device. The measurement report information is used by the first network device to determine to hand over the first terminal device from a first cell to a second cell.

The measurement report information includes information such as an identifier of a second terminal device, an identifier of the first cell, and signal strength of a third terminal device and/or capability information of the third terminal device and signal strength of the second terminal device that are obtained by the first terminal device through measurement. The capability information of the third terminal device indicates whether the third terminal device supports multi-path. The first terminal device communicates with the second terminal device through a first sidelink. The second terminal device communicates with the first network device via a wireless network, and the second terminal device is configured to provide a function needed for communication between the first terminal device and the first network device. In other words, the second terminal device is configured to forward data of the first terminal device to communicate with the first network device. The first cell is a cell served by the first network device. It should be understood that the capability information of the third terminal device includes a release (release) version supported by the third terminal device. For example, a device of an R17 version supports the multi-path, and a device of an R16 version does not support the multi-path and supports only a relay link/an indirect link. The measurement report information may include capability information of one or more third terminal devices. The third terminal device is a terminal device whose signal strength determined by the first terminal device through measurement meets a preset condition. It may be understood that the measurement report information may include information like the signal strength of the third terminal device. Optionally, the measurement report information may further include the capability information of the third terminal device.

1503: The first network device receives the measurement report information sent by the first terminal device, and the first network device determines, based on the measurement report information, to hand over the first terminal device from the first cell to the second cell. Specifically, the first network device may determine, based on the measurement report information and RRM information, to hand over the first terminal device from the first cell to the second cell. The second cell is a cell served by a second network device.

1504: The first network device sends second configuration information to the second terminal device. The second configuration information does not include a related configuration of the second terminal device serving as a relay of the first terminal device, and the second configuration information is a related configuration of a relay reconfigured by the first network device for the second terminal device.

1505: The second terminal device receives the second configuration information sent by the first network device. The second terminal device releases the first sidelink between the second terminal device and the first terminal device based on the second configuration information. Specifically, because the second configuration information does not include the related configuration of the second terminal device serving as the relay of the first terminal device, in other words, the related configuration of the second terminal device serving as the relay of the first terminal device has been deleted, the second terminal device releases the first sidelink between the second terminal device and the first terminal device.

If the second network device determines a link used by the first terminal device to communicate with the second network device after the inter-base station handover, and the second network device determines a target terminal device, the following steps 1506 to 1508 are performed.

1506: The first network device sends a handover request message to the second network device. The handover request message indicates to hand over the first terminal device from the first cell to the second cell. The handover request message may include an identifier of the second cell, a cell radio network temporary identifier of the first terminal device in the first cell, and related information of the third terminal device that is obtained by the first terminal device through measurement. Optionally, the related information of the third terminal device includes the signal strength of the third terminal device. Optionally, the related information of the third terminal device may further include the capability information of the third terminal device. For example, the third terminal device is a terminal device served by the second cell.

Optionally, when the first network device determines that capability information of the second network device is not obtained or the capability information of the second network device does not match capability information of the first network device, the handover request message sent by the first network device to the second network device does not include sidelink configuration information of the first terminal device. The capability information of the second network device indicates whether the second network device supports the multi-path.

The first network device obtains the capability information of the second network device in a plurality of manners. For example, the first network device may directly exchange the respective capability information with the second network device. For another example, the measurement report information sent by the first terminal device includes capability information of different cells, so that the first network device can obtain the capability information of the second network device. Specifically, the capability information of the different cells may be obtained by the first terminal device through a SIB1 message broadcast by a system.

When the first terminal device performs the inter-base station handover, and the first network device determines that the capability information of the second network device is not obtained or the capability information of the second network device does not match the capability information of the first network device, the handover request message sent by the first network device to the second network device does not include the sidelink configuration information of the first terminal device. This can prevent the handover request message from carrying the sidelink configuration information of the first terminal device that cannot be understood by the second network device, and prevent fullConfig handover from being triggered.

1507: The second network device receives the handover request message sent by the first network device, and performs access control.

1508: The second network device prepares to hand over the first terminal device from the first cell to the second cell, and sends a handover request acknowledgement message to the first network device. The handover request acknowledgement message includes the cell radio network temporary identifier of the first terminal device in the second cell. Optionally, the handover request acknowledgement message further includes an identifier of the target terminal device. The target terminal device is determined by the second network device in the one or more third terminal devices based on the related information of the third terminal device. The target terminal device is configured to provide a function needed for communication between the first terminal device and the second network device. In other words, the target terminal device is configured to forward data of the first terminal device to communicate with the second network device. Correspondingly, the first network device receives the handover request acknowledgement message sent by the second network device.

Optionally, the second network device sends an RRC reconfiguration message to the target terminal device. The RRC reconfiguration message includes information like the identifier of the second cell. Correspondingly, the target terminal device receives the RRC reconfiguration message sent by the second network device, and sends an RRC reconfiguration success message to the second network device.

If the first network device determines a link used by the first terminal device to communicate with the second network device after the inter-base station handover, and the first network device determines a target terminal device, the following steps 1506a to 1508a are performed.

1506a: The first network device sends a handover request message to the second network device. The handover request message indicates to hand over the first terminal device from the first cell to the second cell. The handover request message may include an identifier of the second cell and a cell radio network temporary identifier of the first terminal device in the first cell. Optionally, the handover request message further includes an identifier of the target terminal device. The target terminal device is determined by the first network device in the one or more third terminal devices based on the measurement report information sent by the first terminal device, and the target terminal device is configured to provide a function needed for communication between the first terminal device and the second network device.

Optionally, when the first network device determines that capability information of the second network device is not obtained or the capability information of the second network device does not match capability information of the first network device, the handover request message sent by the first network device to the second network device does not include sidelink configuration information of the first terminal device. The capability information of the second network device indicates whether the second network device supports the multi-path.

The first network device obtains the capability information of the second network device in a plurality of manners. For example, the first network device may directly exchange the respective capability information with the second network device. For another example, the measurement report information sent by the first terminal device includes capability information of different cells, so that the first network device can obtain the capability information of the second network device. Specifically, the capability information of the different cells may be obtained by the first terminal device through a SIB1 message broadcast by a system.

When the first terminal device performs the inter-base station handover, and the first network device determines that the capability information of the second network device is not obtained or the capability information of the second network device does not match the capability information of the first network device, the handover request message sent by the first network device to the second network device does not include the sidelink configuration information of the first terminal device. This can prevent the handover request message from carrying the sidelink configuration information of the first terminal device that cannot be understood by the second network device, and prevent fullConfig handover from being triggered.

1507a: The second network device receives the handover request message sent by the first network device, and performs access control.

1508a: The second network device prepares to hand over the first terminal device from the first cell to the second cell, and sends a handover request acknowledgement message to the first network device. The handover request acknowledgement message includes the cell radio network temporary identifier of the first terminal device in the second cell. Correspondingly, the first network device receives the handover request acknowledgement message sent by the second network device.

1509: The first network device sends first configuration information to the first terminal device. The first configuration information is used by the first terminal device to perform the handover from the first cell to the second cell. The first configuration information includes the identifier of the second cell and the C-RNTI of the first terminal device in the second cell. Optionally, the first configuration information sent by the first network device to the first terminal device further includes the identifier of the target terminal device, and the identifier is used by the first terminal device to establish a second sidelink between the first terminal device and the target terminal device. Correspondingly, the first terminal device receives the first configuration information sent by the first network device.

It should be understood that, when the first network device or the second network device determines that the first terminal device communicates with the second network device through the relay link or a multi-path link, the first configuration information may include the identifier of the target terminal device. When the first network device or the second network device determines that the first terminal device communicates with the second network device through only a Uu link after the inter-base station handover, the first configuration information sent by the first network device to the first terminal device may not include the identifier of the target terminal device.

1510: The first terminal device performs the handover from the first cell to the second cell based on the first configuration information.

For example, if the first configuration information indicates that the first terminal device communicates with the second cell through a direct link/only the Uu link, the first terminal device establishes the direct link between the first terminal device and the second cell based on the first configuration information. In other words, the first terminal device is handed over to the second cell through the direct link.

For example, if the first configuration information indicates that the first terminal device communicates with the second cell through only the relay link, the first terminal device establishes the second sidelink between the first terminal device and the target terminal device based on the first configuration information, and the first terminal device is handed over to the second cell through the relay link.

For example, if the first configuration information indicates that the first terminal device communicates with the second cell through the multi-path link, the first terminal device establishes, based on the first configuration information, the second sidelink between the first terminal device and the target terminal device and the Uu link between the first terminal device and the second network device, and the first terminal device is handed over to the second cell through the multi-path link. The target terminal device communicates with the second cell via a wireless network.

1511: If a DRB is configured with a DAPS, the first network device sends an early status transfer message to the second network device. The early status transfer message is used by the second network device to clear a data packet that has been sent by the first network device in stored data.

1512: The first network device sends an SN status transfer message to the second network device, to notify a target base station of a PDCP sequence number.

1513: The first terminal device is successfully handed over from the first cell to the second cell, and sends a handover success notification message to the second network device, to notify the second network device that the handover is successfully completed. For example, if the first terminal device communicates with the second network device through only the relay link after the inter-base station handover, the first terminal device forwards the handover success notification message to the second network device via the target terminal device. In other words, the first terminal device sends the handover success notification message to the second network device through the relay link. For example, if the first terminal device communicates with the second network device through only the Uu link after the inter-base station handover, the first terminal device sends the handover success notification message to the second network device through the Uu link. For example, if the first terminal device communicates with the second network device through only the multi-path link after the inter-base station handover, the first terminal device sends the handover success notification message to the second network device through the Uu link or the relay link.

According to the technical solution provided in this embodiment of this application, when the first network device determines to hand over the first terminal device from the first cell to the second cell, the first network device sends the second configuration information to the second terminal device. The second configuration information does not include the related configuration of the second terminal device serving as the relay of the first terminal device, and the second configuration information is a related configuration of a relay reconfigured by the first network device for the second terminal device. The second terminal device releases the first sidelink between the second terminal device and the first terminal device based on the second configuration information. The first terminal device is a remote UE, and the second terminal device is a relay UE. The first cell is the cell served by the first network device, and the second cell may be the cell served by the first network device or may be the cell served by the second network device. Therefore, in this embodiment of this application, inter-cell/inter-base station handover of the remote UE in a U2N relay scenario can be implemented.

The foregoing describes the communication method provided in embodiments of this application. The following describes an execution body for performing the foregoing communication method.

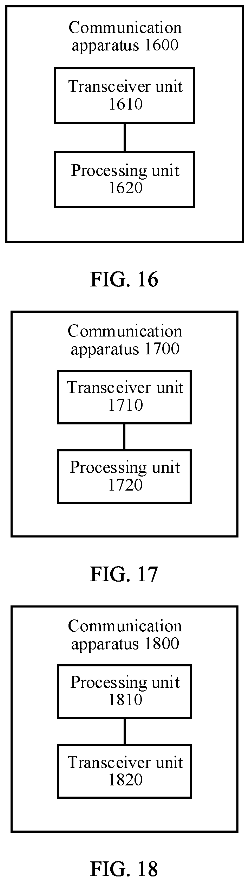

An embodiment of this application provides a communication apparatus. FIG. 16 is a diagram of a structure of a communication apparatus 1600 according to an embodiment of this application. The apparatus may be used or deployed in the first terminal device in the method embodiments in FIG. 10 and FIG. 11. The communication apparatus 1600 includes:
a transceiver unit 1610, configured to receive first indication information sent by a first network device, where the first indication information indicates to release a first sidelink between the apparatus and a second terminal device, the second terminal device communicates with the first network device via a wireless network, the second terminal device is configured to provide a function needed for communication between the apparatus and the first network device, and a first cell is a cell served by the first network device; and
a processing unit 1620, configured to release the first sidelink based on the first indication information.

The transceiver unit 1610 is further configured to receive first configuration information sent by the first network device. The first configuration information is used by the apparatus to perform handover from the first cell to a second cell.

Optionally, the transceiver unit 1610 is further configured to send measurement report information to the first network device. The measurement report information is used by the first network device to determine to hand over the apparatus from the first cell to the second cell. The measurement report information includes signal strength of a third terminal device and/or capability information of the third terminal device that are/is obtained by the apparatus through measurement. The capability information of the third terminal device indicates whether the third terminal device supports multi-path.

Optionally, the processing unit 1620 is further configured to establish a direct link between the apparatus and the second cell based on the first configuration information.

Optionally, the first configuration information further includes an identifier of a target terminal device. The target terminal device is configured to provide a function needed for communication between the apparatus and the second cell. The third terminal device includes the target terminal device.

The processing unit 1620 is further configured to establish a second sidelink between the apparatus and the target terminal device based on the first configuration information.

Optionally, the transceiver unit 1610 is further configured to receive the capability information of the third terminal device from the third terminal device.

Optionally, the transceiver unit 1610 is further configured to send a release complete message to the first network device. The release complete message indicates that the first sidelink is successfully released.

An embodiment of this application provides a communication apparatus. FIG. 17 is a diagram of a structure of a communication apparatus 1700 according to an embodiment of this application. The apparatus may be used or deployed in the first network device in the method embodiments in FIG. 10 and FIG. 11. The communication apparatus 1700 includes:
a transceiver unit 1710, configured to send first indication information to a first terminal device, where the first indication information indicates to release a first sidelink between the first terminal device and a second terminal device, the second terminal device communicates with the apparatus via a wireless network, the second terminal device is configured to provide a function needed for communication between the first terminal device and the apparatus, and a first cell is a cell served by the apparatus.

The transceiver unit 1710 is further configured to send first configuration information to the first terminal device. The first configuration information is used by the first terminal device to perform handover from the first cell to a second cell.

Optionally, the transceiver unit 1710 is further configured to receive measurement report information sent by the first terminal device. The measurement report information is used by the apparatus to determine to hand over the first terminal device from the first cell to the second cell. The measurement report information includes signal strength of a third terminal device and/or capability information of the third terminal device that are/is obtained by the first terminal device through measurement. The capability information of the third terminal device indicates whether the third terminal device supports multi-path.

Optionally, the transceiver unit 1710 is further configured to send a handover request message to a second network device. The handover request message indicates to hand over the first terminal device from the first cell to the second cell. The handover request message includes related information of the third terminal device that is obtained by the first terminal device through measurement. The second cell is a cell served by the second network device. The third terminal device is a terminal device served by the second cell.

The transceiver unit 1710 is further configured to receive a handover request acknowledgement message sent by the second network device. The handover request acknowledgement message includes an identifier of a target terminal device. The target terminal device is determined by the second network device in the third terminal device. The target terminal device is configured to provide a function needed for communication between the first terminal device and the second network device.

The first configuration information includes the identifier of the target terminal device.

Optionally, the related information of the third device includes the capability information of the third terminal device.

Optionally, the transceiver unit 1710 is further configured to send a handover request message to a second network device. The handover request message indicates to hand over the first terminal device from the first cell to the second cell. The handover request message includes an identifier of a target terminal device. The target terminal device is determined by the apparatus in the third terminal device. The target terminal device is configured to provide a function needed for communication between the first terminal device and the second network device. The second cell is a cell served by the second network device.

The transceiver unit 1710 is further configured to receive a handover request acknowledgement message sent by the second network device.

The first configuration information includes the identifier of the target terminal device.

Optionally, the transceiver unit 1710 is further configured to receive a release complete message sent by the first terminal device. The release complete message indicates that the first sidelink is successfully released.

Optionally, the apparatus further includes: a processing unit 1720, configured to determine that capability information of the second network device is not obtained or the capability information of the second network device does not match capability information of the first network device, where the capability information of the first network device indicates whether the first network device supports the multi-path, and the capability information of the second network device indicates whether the second network device supports the multi-path.

An embodiment of this application provides a communication apparatus. FIG. 18 is a diagram of a structure of a communication apparatus 1800 according to an embodiment of this application. The apparatus may be used or deployed in the first terminal device in the method embodiments in FIG. 12 and FIG. 13. The communication apparatus 1800 includes a processing unit 1810 and a transceiver unit 1820.

The processing unit 1810 is configured to: when the transceiver unit 1820 receives first configuration information sent by a first network device, release a first sidelink between the apparatus and a second terminal device, where the first configuration information is used by the apparatus to perform handover from a first cell to a second cell, where, the second terminal device communicates with the apparatus via a wireless network, the second terminal device is configured to provide a function needed for communication between the apparatus and the first network device, and the first cell is a cell served by the first network device.

The processing unit 1810 is further configured to perform the handover from the first cell to the second cell based on the first configuration information.

Optionally, the apparatus 1800 further includes the transceiver unit 1820, configured to send measurement report information to the first network device. The measurement report information is used by the first network device to determine to hand over the apparatus from the first cell to the second cell. The measurement report information includes signal strength of a third terminal device and/or capability information of the third terminal device that are/is obtained by the apparatus through measurement. The capability information of the third terminal device indicates whether the third terminal device supports multi-path.

Optionally, the processing unit 1810 is specifically configured to establish a direct link between the apparatus and the second cell based on the first configuration information.

Optionally, the first configuration information further includes an identifier of a target terminal device. The target terminal device is configured to provide a function needed for communication between the apparatus and the second cell. The third terminal device includes the target terminal device.

The processing unit 1810 is specifically configured to establish a second sidelink between the apparatus and the target terminal device based on the first configuration information.

Optionally, the transceiver unit 1820 is further configured to receive the capability information of the third terminal device from the third terminal device.

Optionally, the processing unit 1810 is specifically configured to:
determine, based on an identifier of the second cell, that the second cell is a cell served by the second network device; and
release the first sidelink between the apparatus and the second terminal device.

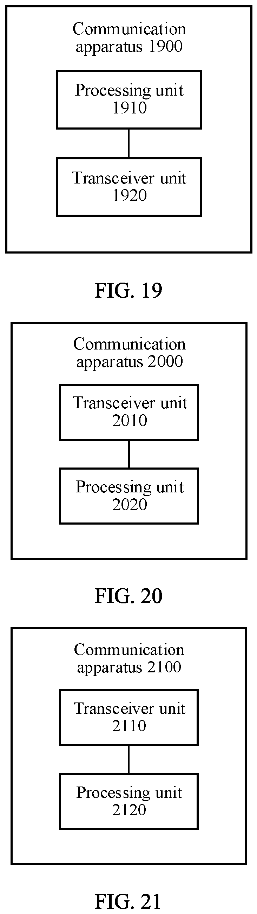

An embodiment of this application provides a communication apparatus. FIG. 19 is a diagram of a structure of a communication apparatus 1900 according to an embodiment of this application. The apparatus may be used or deployed in the first network device in the method embodiments in FIG. 12 and FIG. 13. The communication apparatus 1900 includes:
a processing unit 1910, configured to determine to hand over a first terminal device from a first cell to a second cell, where a second terminal device communicates with the apparatus via a wireless network, the second terminal device is configured to provide a function needed for communication between the first terminal device and the apparatus, and the first cell is a cell served by the apparatus; and
a transceiver unit 1920, configured to send first configuration information to the first terminal device, where the first configuration information is used by the first terminal device to perform the handover from the first cell to the second cell.

Optionally, the transceiver unit 1920 is further configured to receive measurement report information sent by the first terminal device. The measurement report information is used by the apparatus to determine to hand over the first terminal device from the first cell to the second cell. The measurement report information includes signal strength of a third terminal device and/or capability information of the third terminal device that are/is obtained by the first terminal device through measurement. The capability information of the third terminal device indicates whether the third terminal device supports multi-path.

Optionally, the transceiver unit 1920 is further configured to send a handover request message to a second network device. The handover request message indicates to hand over the first terminal device from the first cell to the second cell. The handover request message includes related information of the third terminal device that is obtained by the first terminal device through measurement. The second cell is a cell served by the second network device. The third terminal device is a terminal device served by the second cell.

The transceiver unit 1920 is further configured to receive a handover request acknowledgement message sent by the second network device. The handover request acknowledgement message includes an identifier of a target terminal device. The target terminal device is determined by the second network device in the third terminal device. The target terminal device is configured to provide a function needed for communication between the first terminal device and the second network device.

The first configuration information includes the identifier of the target terminal device.

Optionally, the related information of the third terminal device includes the capability information of the third terminal device.

Optionally, the transceiver unit 1920 is further configured to send a handover request message to a second network device. The handover request message indicates to hand over the first terminal device from the first cell to the second cell. The handover request message includes an identifier of a target terminal device. The target terminal device is determined by the first network device in the third terminal device. The target terminal device is configured to provide a function needed for communication between the first terminal device and the second network device. The second cell is a cell served by the second network device.

The transceiver unit 1920 is further configured to receive a handover request acknowledgement message sent by the second network device.

The first configuration information includes the identifier of the target terminal device.

Optionally, when the processing unit 1910 is further configured to determine that capability information of the second network device is not obtained or the capability information of the second network device does not match capability information of the first network device, the handover request message does not include sidelink configuration information of the first terminal device. The capability information of the first network device indicates whether the first network device supports the multi-path, and the capability information of the second network device indicates whether the second network device supports the multi-path.

An embodiment of this application provides a communication apparatus. FIG. 20 is a diagram of a structure of the communication apparatus 2000 according to this embodiment of this application. The apparatus may be used or deployed in the second terminal device in the method embodiments in FIG. 14 and FIG. 15. The communication apparatus 2000 includes:
a transceiver unit 2010, configured to receive second configuration information sent by a first network device, where the apparatus communicates with the first network device via a wireless network, the apparatus communicates with a first terminal device through a first sidelink, and the apparatus is configured to provide a function needed for communication between the first terminal device and the first network device; and
a processing unit 2020, configured to release the first sidelink based on the second configuration information, where the second configuration information does not include a related configuration of the apparatus serving as a relay of the first terminal device, and the second configuration information is a related configuration of a relay reconfigured by the first network device for the second terminal device.

An embodiment of this application provides a communication apparatus. FIG. 21 is a diagram of a structure of the communication apparatus 2100 according to this embodiment of this application. The apparatus may be used or deployed in the first terminal device in the method embodiments in FIG. 14 and FIG. 15. The communication apparatus 2100 includes:
a transceiver unit 2110, configured to receive first configuration information sent by a first network device, where the first configuration information is used by the apparatus to perform handover from a first cell to a second cell, a second terminal device communicates with the first network device via a wireless network, the second terminal device is configured to provide a function needed for communication between the apparatus and the first network device, and the first cell is a cell served by the first network device; and
a processing unit 2120, configured to perform the handover from the first cell to the second cell based on the first configuration information.

Optionally, the transceiver unit 2110 is further configured to send measurement report information to the first network device. The measurement report information is used by the first network device to determine to hand over the apparatus from the first cell to the second cell. The measurement report information includes signal strength of a third terminal device and/or capability information of the third terminal device that are/is obtained by the apparatus through measurement. The capability information of the third terminal device indicates whether the third terminal device supports multi-path.

Optionally, the processing unit 2120 is specifically configured to establish a direct link between the apparatus and the second cell based on the first configuration information.

Optionally, the first configuration information further includes an identifier of a target terminal device. The target terminal device is configured to provide a function needed for communication between the apparatus and the second cell. The third terminal device includes the target terminal device.

The processing unit 2120 is specifically configured to establish a second sidelink between the apparatus and the target terminal device based on the first configuration information.

Optionally, the transceiver unit 2110 is further configured to receive the capability information of the third terminal device from the third terminal device.

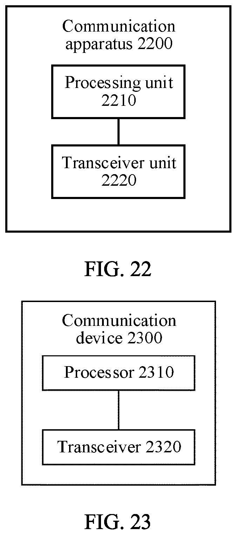

An embodiment of this application provides a communication apparatus. FIG. 22 is a diagram of a structure of the communication apparatus 2200 according to this embodiment of this application. The apparatus may be used or deployed in the first network device in the method embodiments in FIG. 14 and FIG. 15. The communication apparatus 2200 includes:
a processing unit 2210, configured to determine to hand over a first terminal device from a first cell to a second cell, where a second terminal device communicates with the apparatus via a wireless network, the second terminal device communicates with the first terminal device through a first sidelink, the second terminal device is configured to provide a function needed for communication between the first terminal device and the apparatus, and the first cell is a cell served by the apparatus; and
a transceiver unit 2220, configured to send second configuration information to the second terminal device, where the second configuration information does not include a related configuration of the second terminal device serving as a relay of the first terminal device, and the second configuration information is a related configuration of a relay reconfigured by the first network device for the second terminal device.

Optionally, the transceiver unit 2220 is further configured to receive measurement report information sent by the first terminal device. The measurement report information is used by the apparatus to determine to hand over the first terminal device from the first cell to the second cell. The measurement report information includes signal strength of a third terminal device and/or capability information of the third terminal device that are/is obtained by the first terminal device through measurement. The capability information of the third terminal device indicates whether the third terminal device supports multi-path.

Optionally, the transceiver unit 2220 is further configured to send a handover request message to a second network device. The handover request message indicates to hand over the first terminal device from the first cell to the second cell. The handover request message includes related information of the third terminal device that is obtained by the first terminal device through measurement. The second cell is a cell served by the second network device. The third terminal device is a terminal device served by the second cell.

The transceiver unit 2220 is further configured to receive a handover request acknowledgement message sent by the second network device. The handover request acknowledgement message includes an identifier of a target terminal device. The target terminal device is determined by the second network device in the third terminal device. The target terminal device is configured to provide a function needed for communication between the first terminal device and the second network device.

The transceiver unit 2220 is further configured to send first configuration information to the first terminal device. The first configuration information is used by the first terminal device to perform the handover from the first cell to the second cell. The first configuration information includes the identifier of the target terminal device.

Optionally, the related information of the third terminal device includes the capability information of the third terminal device.

Optionally, the transceiver unit 2220 is further configured to send a handover request message to a second network device. The handover request message indicates to hand over the first terminal device from the first cell to the second cell. The handover request message includes an identifier of a target terminal device. The target terminal device is determined by the apparatus in the third terminal device. The target terminal device is configured to provide a function needed for communication between the first terminal device and the second network device. The second cell is a cell served by the second network device.

The transceiver unit 2220 is further configured to receive a handover request acknowledgement message sent by the second network device.

The transceiver unit 2220 is further configured to send first configuration information to the first terminal device. The first configuration information is used by the first terminal device to perform the handover from the first cell to the second cell. The first configuration information includes the identifier of the target terminal device.

Optionally, when the processing unit 2210 is further configured to determine that capability information of the second network device is not obtained or the capability information of the second network device does not match capability information of the first network device, the handover request message does not include sidelink configuration information of the first terminal device. The capability information of the first network device indicates whether the first network device supports the multi-path, and the capability information of the second network device indicates whether the second network device supports the multi-path.

An embodiment of this application provides a communication device 2300. FIG. 23 is a block diagram of the communication device 2300 according to this embodiment of this application.

The communication device 2300 includes a processor 2310 and a transceiver 2320. The transceiver 2320 is configured to: receive computer code or instructions, and transmit the computer code or the instructions to the processor 2310. The processor 2310 runs the computer code or the instructions, to implement the methods according to embodiments of this application. The communication device may be the first terminal device, the second terminal device, the first network device, or the second network device in embodiments of this application.

The processor 2310 may be an integrated circuit chip and has a signal processing capability. In an implementation process, steps in the foregoing method embodiments may be completed by using a hardware integrated logic circuit in the processor, or by using instructions in a form of software. The processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware component. The processor may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

An embodiment of this application further provides a communication system, including the first terminal device, the second terminal device, the target terminal device, the first network device, and the second network device in the communication methods provided in embodiments of this application, and another communication device that communicates with the first terminal device, the second terminal device, the target terminal device, the first network device, or the second network device.

An embodiment of this application further provides a computer-readable storage medium. The computer-readable storage medium stores a computer program used to implement the methods in the foregoing method embodiments. When the computer program is run on a computer, the computer is enabled to implement the methods in the foregoing method embodiments.

An embodiment of this application further provides a computer program product. The computer program product includes computer program code. When the computer program code is run on a computer, the methods in the foregoing method embodiments are enabled to be performed.

An embodiment of this application further provides a chip, including a processor. The processor is connected to a memory. The memory is configured to store a computer program. The processor is configured to execute the computer program stored in the memory, to enable the chip to perform the methods in the foregoing method embodiments.

It should be understood that in embodiments of this application, numbers "first", "second", and the like are merely for distinguishing between different objects, for example, to distinguish between different terminal devices or different network devices, and do not constitute a limitation on the scope of embodiments of this application. Embodiments of this application are not limited thereto.

In addition, the term "and/or" in this application describes only an association relationship for describing associated objects and represents that three relationships may exist. For example, A and/or B may represent the following three cases: Only A exists, both A and B exist, and only B exists. In addition, the character "/" in this specification usually represents an "or" relationship between the associated objects. In this application, the term "at least one" may represent "one" and "two or more". For example, at least one of A, B, and C may represent the following seventh cases: Only A exists, only B exists, only C exists, both A and B exist, both A and C exist, and both C and B exist, and A, B, C all exist.

A person of ordinary skill in the art may be aware that, units and algorithm steps in the examples described in combination with embodiments disclosed in this specification may be implemented by electronic hardware or a combination of computer software and the electronic hardware. Whether the functions are performed by hardware or software depends on particular applications and design constraint conditions of the technical solutions. A person skilled in the art may use different methods to implement the described functions for each particular application, but it should not be considered that this implementation goes beyond the scope of this application.

It may be clearly understood by a person skilled in the art that, for the purpose of convenient and brief description, for a specific working process of the foregoing system, apparatus, and unit, refer to a corresponding process in the foregoing method embodiment. Details are not described herein again.

In the several embodiments provided in this application, it should be understood that the disclosed systems, apparatuses, and methods may be implemented in other manners. For example, the foregoing apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, that is, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The foregoing storage medium includes: any medium that can store program code, for example, a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method is applicable to a process of handing over a first terminal device from a first cell to a second cell, and comprises:
receiving, by the first terminal device, first indication information sent by a first network device, wherein the first indication information indicates to release a first sidelink between the first terminal device and a second terminal device, the second terminal device communicates with the first network device via a wireless network, the second terminal device is configured to provide a function needed for communication between the first terminal device and the first network device, and the first cell is a cell served by the first network device;
releasing, by the first terminal device, the first sidelink based on the first indication information; and
receiving, by the first terminal device, first configuration information sent by the first network device, wherein the first configuration information is used by the first terminal device to perform the handover from the first cell to the second cell.

2. The method according to claim 1, wherein before the receiving, by the first terminal device, first indication information sent by a first network device, the method further comprises:
sending, by the first terminal device, measurement report information to the first network device, wherein the measurement report information is used by the first network device to determine to hand over the first terminal device from the first cell to the second cell, the measurement report information comprises signal strength of a third terminal device and/or capability information of the third terminal device that are/is obtained by the first terminal device through measurement, and the capability information of the third terminal device indicates whether the third terminal device supports multi-path.

3. The method according to claim 1 or 2, wherein the method further comprises:
establishing, by the first terminal device, a direct link between the first terminal device and the second cell based on the first configuration information.

4. The method according to claim 2 or 3, wherein
the first configuration information further comprises an identifier of a target terminal device, the target terminal device is configured to provide a function needed for communication between the first terminal device and the second cell, and the third terminal device comprises the target terminal device; and
the method further comprises: establishing, by the first terminal device, a second sidelink between the first terminal device and the target terminal device based on the first configuration information.

5. The method according to any one of claims 2 to 4, wherein before the sending, by the first terminal device, measurement report information to the first network device, the method further comprises:
receiving, by the first terminal device, the capability information of the third terminal device from the third terminal device.

6. The method according to any one of claims 1 to 5, wherein before the receiving, by the first terminal device, first configuration information sent by the first network device, the method further comprises:
sending, by the first terminal device, a release complete message to the first network device, wherein the release complete message indicates that the first sidelink is successfully released.

7. A communication method, wherein the method is applicable to a process of handing over a first terminal device from a first cell to a second cell, and comprises:
sending, by a first network device, first indication information to the first terminal device, wherein the first indication information indicates to release a first sidelink between the first terminal device and a second terminal device, the second terminal device communicates with the first network device via a wireless network, the second terminal device provides a function needed for communication between the first terminal device and the first network device, and the first cell is a cell served by the first network device; and
sending, by the first network device, first configuration information to the first terminal device, wherein the first configuration information is used by the first terminal device to perform the handover from the first cell to the second cell.

8. The method according to claim 7, wherein before the sending, by a first network device, first indication information to the first terminal device, the method further comprises:
receiving, by the first network device, measurement report information sent by the first terminal device, wherein the measurement report information is used by the first network device to determine to hand over the first terminal device from the first cell to the second cell, the measurement report information comprises signal strength of a third terminal device and/or capability information of the third terminal device that are/is obtained by the first terminal device through measurement, and the capability information of the third terminal device comprises whether the third terminal device supports multi-path.

9. The method according to claim 8, wherein before the sending, by the first network device, first configuration information to the first terminal device, the method further comprises:
sending, by the first network device, a handover request message to a second network device, wherein the handover request message indicates to hand over the first terminal device from the first cell to the second cell, the handover request message comprises related information of the third terminal device that is obtained by the first terminal device through measurement, the second cell is a cell served by the second network device, and the third terminal device is a terminal device served by the second cell; and
receiving, by the first network device, a handover request acknowledgement message sent by the second network device, wherein the handover request acknowledgement message comprises an identifier of a target terminal device, the target terminal device is determined by the second network device in the third terminal device, and the target terminal device is configured to provide a function needed for communication between data of the first terminal device and the second network device, wherein
the first configuration information comprises the identifier of the target terminal device.

10. The method according to claim 9, wherein
the related information of the third device comprises the capability information of the third terminal device.

11. The method according to claim 8, wherein before the sending, by the first network device, first configuration information to the first terminal device, the method further comprises:
sending, by the first network device, a handover request message to a second network device, wherein the handover request message indicates to hand over the first terminal device from the first cell to the second cell, the handover request message comprises an identifier of a target terminal device, the target terminal device is determined by the first network device in the third terminal device, the target terminal device is configured to provide a function needed for communication between the first terminal device and the second network device, and the second cell is a cell served by the second network device; and
receiving, by the first network device, a handover request acknowledgement message sent by the second network device, wherein
the first configuration information comprises the identifier of the target terminal device.

12. The method according to any one of claims 9 to 11, wherein before the sending, by the first network device, a handover request message to a second network device, the method further comprises:
receiving, by the first network device, a release complete message sent by the first terminal device, wherein the release complete message indicates that the first sidelink is successfully released.

13. The method according to any one of claims 9 to 12, wherein before the sending, by a first network device, first indication information to the first terminal device, the method further comprises:
determining, by the first network device, that capability information of the second network device is not obtained or the capability information of the second network device does not match capability information of the first network device, wherein the capability information of the first network device indicates whether the first network device supports the multi-path, and the capability information of the second network device indicates whether the second network device supports the multi-path.

14. A communication method, wherein the method is applicable to a process of handing over a first terminal device from a first cell to a second cell, and comprises:
when the first terminal device receives first configuration information sent by a first network device, releasing, by the first terminal device, a first sidelink between the first terminal device and a second terminal device, wherein the first configuration information is used by the first terminal device to perform the handover from the first cell to the second cell, the second terminal device communicates with the first network device via a wireless network, the second terminal device is configured to provide a function needed for communication between the first terminal device and the first network device, and the first cell is a cell served by the first network device; and
performing, by the first terminal device, the handover from the first cell to the second cell based on the first configuration information.

15. The method according to claim 14, wherein before the first terminal device receives the first configuration information sent by the first network device, the method further comprises:
sending, by the first terminal device, measurement report information to the first network device, wherein the measurement report information is used by the first network device to determine to hand over the first terminal device from the first cell to the second cell, the measurement report information comprises signal strength of a third terminal device and/or capability information of the third terminal device that are/is obtained by the first terminal device through measurement, and the capability information of the third terminal device indicates whether the third terminal device supports multi-path.

16. The method according to claim 14 or 15, wherein the performing, by the first terminal device, the handover from the first cell to the second cell based on the first configuration information comprises:
establishing, by the first terminal device, a direct link between the first terminal device and the second cell based on the first configuration information.

17. The method according to claim 14 or 16, wherein
the first configuration information further comprises an identifier of a target terminal device, the target terminal device is configured to provide a function needed for communication between the first terminal device and the second cell, and the third terminal device comprises the target terminal device; and
the performing, by the first terminal device, the handover from the first cell to the second cell based on the first configuration information comprises: establishing, by the first terminal device, a second sidelink between the first terminal device and the target terminal device based on the first configuration information.

18. The method according to any one of claims 15 to 17, wherein before the sending, by the first terminal device, measurement report information to the first network device, the method further comprises:
receiving, by the first terminal device, the capability information of the third terminal device from the third terminal device.

19. The method according to any one of claims 14 to 18, wherein the releasing, by the first terminal device, a first sidelink between the first terminal device and a second terminal device comprises:
determining, by the first terminal device based on an identifier of the second cell, that the second cell is a cell served by a second network device; and
releasing, by the first terminal device, the first sidelink between the first terminal device and the second terminal device.

20. A communication method, wherein the method is applicable to a process of handing over a first terminal device from a first cell to a second cell, and comprises:
determining, by a first network device, to hand over the first terminal device from the first cell to the second cell, wherein a second terminal device communicates with the first network device via a wireless network, the second terminal device is configured to provide a function needed for communication between the first terminal device and the first network device, and the first cell is a cell served by the first network device; and
sending, by the first network device, first configuration information to the first terminal device, wherein the first configuration information is used by the first terminal device to perform the handover from the first cell to the second cell.

21. The method according to claim 20, wherein before the determining, by a first network device, to hand over the first terminal device from the first cell to the second cell, the method further comprises:
receiving, by the first network device, measurement report information sent by the first terminal device, wherein the measurement report information is used by the first network device to determine to hand over the first terminal device from the first cell to the second cell, the measurement report information comprises signal strength of a third terminal device and/or capability information of the third terminal device that are/is obtained by the first terminal device through measurement, and the capability information of the third terminal device indicates whether the third terminal device supports multi-path.

22. The method according to claim 21, wherein before the sending, by the first network device, first configuration information to the first terminal device, the method further comprises:
sending, by the first network device, a handover request message to a second network device, wherein the handover request message indicates to hand over the first terminal device from the first cell to the second cell, the handover request message comprises related information of the third terminal device that is obtained by the first terminal device through measurement, the second cell is a cell served by the second network device, and the third terminal device is a terminal device served by the second cell; and
receiving, by the first network device, a handover request acknowledgement message sent by the second network device, wherein the handover request acknowledgement message comprises an identifier of a target terminal device, the target terminal device is determined by the second network device in the third terminal device, and the target terminal device is configured to provide a function needed for communication between the first terminal device and the second network device, wherein
the first configuration information comprises the identifier of the target terminal device.

23. The method according to claim 22, wherein
the related information of the third terminal device comprises the capability information of the third terminal device.

24. The method according to claim 21, wherein before the sending, by the first network device, first configuration information to the first terminal device, the method further comprises:
sending, by the first network device, a handover request message to a second network device, wherein the handover request message indicates to hand over the first terminal device from the first cell to the second cell, the handover request message comprises an identifier of a target terminal device, the target terminal device is determined by the first network device in the third terminal device, the target terminal device is configured to provide a function needed for communication between the first terminal device and the second network device, and the second cell is a cell served by the second network device; and
receiving, by the first network device, a handover request acknowledgement message sent by the second network device, wherein
the first configuration information comprises the identifier of the target terminal device.

25. The method according to any one of claims 22 to 24, wherein
when the first network device determines that capability information of the second network device is not obtained or the capability information of the second network device does not match capability information of the first network device, the handover request message does not comprise sidelink configuration information of the first terminal device, the capability information of the first network device indicates whether the first network device supports the multi-path, and the capability information of the second network device indicates whether the second network device supports the multi-path.

26. A communication method, wherein the method is applicable to a process of handing over a first terminal device from a first cell to a second cell, and comprises:
receiving, by a second terminal device, second configuration information sent by a first network device, wherein the second terminal device communicates with the first network device via a wireless network, the second terminal device communicates with the first terminal device through a first sidelink, and the second terminal device is configured to provide a function needed for communication between the first terminal device and the first network device; and
releasing, by the second terminal device, the first sidelink based on the second configuration information, wherein the second configuration information does not comprise a related configuration of the second terminal device serving as a relay of the first terminal device.

27. A communication method, wherein the method is applicable to a process of handing over a first terminal device from a first cell to a second cell, and comprises:
determining, by a first network device, to hand over the first terminal device from the first cell to the second cell, wherein a second terminal device communicates with the first network device via a wireless network, the second terminal device communicates with the first network device through a first sidelink, the second terminal device is configured to provide a function needed for communication between the first terminal device and the first network device, and the first cell is a cell served by the first network device; and
sending, by the first network device, second configuration information to the second terminal device, wherein the second configuration information does not comprise a related configuration of the second terminal device serving as a relay of the first terminal device.

28. The method according to claim 27, wherein before the determining, by a first network device, to hand over the first terminal device from the first cell to the second cell, the method further comprises:
receiving, by the first network device, measurement report information sent by the first terminal device, wherein the measurement report information is used by the first network device to determine to hand over the first terminal device from the first cell to the second cell, the measurement report information comprises signal strength of a third terminal device and/or capability information of the third terminal device that are/is obtained by the first terminal device through measurement, and the capability information of the third terminal device indicates whether the third terminal device supports multi-path.

29. The method according to claim 28, wherein before the sending, by the first network device, second configuration information to the second terminal device, the method further comprises:
sending, by the first network device, a handover request message to a second network device, wherein the handover request message indicates to hand over the first terminal device from the first cell to the second cell, the handover request message comprises related information of the third terminal device that is obtained by the first terminal device through measurement, the second cell is a cell served by the second network device, and the third terminal device is a terminal device served by the second cell;
receiving, by the first network device, a handover request acknowledgement message sent by the second network device, wherein the handover request acknowledgement message comprises an identifier of a target terminal device, the target terminal device is determined by the second network device in the third terminal device, and the target terminal device is configured to provide a function needed for communication between the first terminal device and the second network device; and
sending, by the first network device, first configuration information to the first terminal device, wherein the first configuration information is used by the first terminal device to perform the handover from the first cell to the second cell, and the first configuration information comprises the identifier of the target terminal device.

30. The method according to claim 29, wherein
the related information of the third terminal device comprises the capability information of the third terminal device.

31. The method according to claim 28, wherein the method further comprises:
sending, by the first network device, a handover request message to a second network device, wherein the handover request message indicates to hand over the first terminal device from the first cell to the second cell, the handover request message comprises an identifier of a target terminal device, the target terminal device is determined by the first network device in the third terminal device, the target terminal device is configured to provide a function needed for communication between the first terminal device and the second network device, and the second cell is a cell served by the second network device;
receiving, by the first network device, a handover request acknowledgement message sent by the second network device; and
sending, by the first network device, first configuration information to the first terminal device, wherein the first configuration information is used by the first terminal device to perform the handover from the first cell to the second cell, and the first configuration information comprises the identifier of the target terminal device.

32. The method according to any one of claims 29 to 31, wherein
when the first network device determines that capability information of the second network device is not obtained or the capability information of the second network device does not match capability information of the first network device, the handover request message does not comprise sidelink configuration information of the first terminal device, the capability information of the first network device indicates whether the first network device supports the multi-path, and the capability information of the second network device indicates whether the second network device supports the multi-path.

33. A communication apparatus, comprising a unit configured to perform the method according to any one of claims 1 to 32.

34. A communication device, comprising a processor and a transceiver, wherein the transceiver is configured to receive computer code or instructions and transmit the computer code or the instructions to the processor, and the processor runs the computer code or the instructions to perform the method according to any one of claims 1 to 32.

35. A computer-readable storage medium, wherein
the computer-readable medium stores a computer program; and
when the computer program is run on a computer or a processor, the method according to any one of claims 1 to 32 is performed.

36. A computer program product, comprising a computer program, wherein when the computer program is executed, the method according to any one of claims 1 to 32 is implemented.
